# EUROPÄISCHE PATENTSCHRIFT

(11) **EP 2 739 512 B1**
(45) Veröffentlichungstag und Bekanntmachung des Hinweises auf die Patenterteilung: **09.08.2017**
(21) Anmeldenummer: 12725431.6
(22) Anmeldetag: 04.06.2012
(51) Int. Cl.: B60T 1/10, B60T 7/04, B60T 7/12, B60T 8/1755, B60T 8/1761, B60T 8/34, B60T 8/36, B60T 8/42, B60T 8/48, B60T 13/66, B60T 13/68, B60T 13/74, B60W 30/18, B60T 8/40, B60T 8/32

(54) **STEUERVORRICHTUNG FÜR EIN BREMSSYSTEM EINES FAHRZEUGS, BREMSSYSTEM FÜR EIN FAHRZEUG UND VERFAHREN ZUM BETREIBEN EINES BREMSSYSTEMS EINES FAHRZEUGS**
CONTROL DEVICE FOR A BRAKE SYSTEM OF A VEHICLE, BRAKE SYSTEM FOR A VEHICLE AND METHOD FOR OPERATING A BRAKE SYSTEM OF A VEHICLE
DISPOSITIF DE COMMANDE POUR UNE INSTALLATION DE FREINAGE D'UN VÉHICULE, INSTALLATION DE FREINAGE D'UN VÉHICULE ET PROCÉDÉ DE FONCTIONNEMENT DE L'INSTALLATION DE FREINAGE D'UN VÉHICULE

(30) Priorität: 04.08.2011 DE 102011080431
(43) Veröffentlichungstag der Anmeldung: 11.06.2014
(73) Patentinhaber: Robert Bosch GmbH, 70442 Stuttgart (DE)
(72) Erfinder: STRENGERT, Stefan, 70469 Stuttgart (DE); KUNZ, Michael, 71711 Steinheim An Der Murr (DE); MAUCHER, Thorsten, 69126 Heidelberg (DE)
(86) Internationale Anmeldenummer: PCT/EP2012/060485
(87) Internationale Veröffentlichungsnummer: WO 2013/017314

(56) Entgegenhaltungen:
- WO-A1-2005/102806
- WO-A1-2010/069655
- WO-A2-2010/069659
- DE-A1- 10 316 090
- DE-A1-102006 033 890
- DE-A1-102007 030 441
- DE-A1-102008 002 345
- DE-A1-102008 004 201
- DE-A1-102009 001 401
- DE-A1-102009 028 028
- US-A- 5 568 962

## Beschreibung

Die Erfindung betrifft eine Steuervorrichtung für ein Bremssystem eines Fahrzeugs. Ebenso betrifft die Erfindung ein Bremssystem für ein Fahrzeug. Des Weiteren betrifft die Erfindung ein Verfahren zum Betreiben eines Bremssystems eines Fahrzeugs und ein Verfahren zum Betreiben eines Bremssystems eines Fahrzeugs mit einer X-Bremskreisaufteilung.

Aus der DE 10 2009 001 401 A1, so wie aus der DE 10 2009 028 028 A1 oder aus der DE 10 2008 002 345 A1 sind derartige Steuervorrichtungen und Betriebsverfahren bekannt.

### Stand der Technik

In der DE 196 04 134 A1 sind ein Verfahren und eine Vorrichtung zur Steuerung einer Bremsanlage eines Kraftfahrzeugs mit einem elektrischen Antrieb beschrieben. Bei einem Abbremsen des Fahrzeugs unter Einsatz des elektrischen Antriebs zum gleichzeitigen Aufladen einer Batterie soll das von dem mindestens einen Radbremszylinder der hydraulischen Bremsanlage auf mindestens ein Rad ausgeübte hydraulische Bremsmoment trotz einer Betätigung des Bremspedals reduziert/deaktiviert werden. Dazu soll dem durch die Betätigung des Bremspedals aus dem Hauptbremszylinder zu den Radbremsen verschobenen Druckmittel entgegengewirkt werden, indem durch Öffnen der Auslassventile der hydraulischen Bremsanlage das aus dem Hauptbremszylinder verschobene Druckmittel über den mindestens einen Radbremszylinder in mindestens eine Speicherkammer überführt wird. Auf diese Weise soll eine von dem elektrischen Antrieb ausgeführte regenerative Abbremsung verblendbar sein.

### Offenbarung der Erfindung

Die Erfindung schafft eine Steuervorrichtung für ein Bremssystem eines Fahrzeugs mit den Merkmalen des Anspruchs 1, ein Bremssystem für ein Fahrzeug mit den Merkmalen des Anspruchs 7, ein Verfahren zum Betreiben eines Bremssystems eines Fahrzeugs mit den Merkmalen des Anspruchs 10 und ein Verfahren zum Betreiben eines Bremssystems eines Fahrzeugs mit einer X-Bremskreisaufteilung mit den Merkmalen des Anspruchs 15.

### Vorteile der Erfindung

Die Erfindung schafft ein Bremssystem, das ein erweitertes Einfachsystem darstellt. Durch die Erweiterung ist der Nachteil der stark begrenzten rekuperativen Effizienz der bekannten Einfachsysteme behebbar, ohne dass für die Erweiterung ein großer Arbeitsaufwand im Vergleich zu einem konventionellen Bremssystem auszuführen ist. Somit ist es mittels der vorliegenden Erfindung möglich, eine ausreichende rekuperative Effizienz eines Bremssystems kostengünstig, bzw. bei minimalen Mehrkosten, zu realisieren.

Insbesondere ist mittels der vorliegenden Erfindung ein Bremssystem mit einer vorteilhaften rekuperativen Effizienz realisierbar, dessen Verwendung nicht auf ein Fahrzeug mit einer achsweisen Bremskreisaufteilung beschränkt ist. Stattdessen sind die erfindungsgemäße Steuervorrichtung und das entsprechende Verfahren für ein Fahrzeug mit einer X-Bremskreisaufteilung, bei welchem die einem gemeinsamen Bremskreis zugeordneten Räder an verschiedenen Fahrzeugachsen angeordnet sind, vorteilhaft einsetzbar. Man kann ein Fahrzeug mit einer X-Bremskreisaufteilung auch so umschreiben, dass die einem gemeinsamen Bremskreis zugeordneten Räder diagonal an dem Fahrzeug angeordnet sind. Somit stellt die vorliegende Erfindung eine vorteilhafte Erweiterung eines rekuperierbaren Bremssystems für Fahrzeuge mit einer X-Bremskreisaufteilung dar.

Gegenüber dem Stand der Technik bieten die erfindungsgemäße Steuervorrichtung und das entsprechende Verfahren auch ein Verblenden eines Generator-Bremsmoments bei einem vergleichsweise starken Abbremsen des Fahrzeugs. Wie unten genauer ausgeführt wird, ist durch die Erweiterung der Einsetzbarkeit der Verblendfunktion ein schnelleres Aufladen einer Fahrzeugbatterie ausführbar. Die vorliegende Erfindung trägt somit vorteilhaft zur Reduzierung des Energieverbrauchs und der Abgasemission beim Fahren eines Fahrzeugs bei.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform der Steuervorrichtung;
- Fig. 2A bis 2G: eine schematische Gesamtdarstellung, drei schematische Teildarstellungen und drei Koordinatensysteme zum Erläutern einer ersten Ausführungsform des Bremssystems;
- Fig. 3: eine schematische Gesamtdarstellung einer zweiten Ausführungsform des Bremssystems;
- Fig. 4A bis 4D: vier Koordinatensysteme zum Darstellen einer ersten Ausführungsform des Verfahrens;
- Fig. 5A bis 5D: vier Koordinatensysteme zum Darstellen einer zweiten Ausführungsform des Verfahrens; und
- Fig. 6A bis 6C: drei Koordinatensysteme zum Darstellen einer dritten Ausführungsform des Verfahrens.

### Ausführungsformen der Erfindung

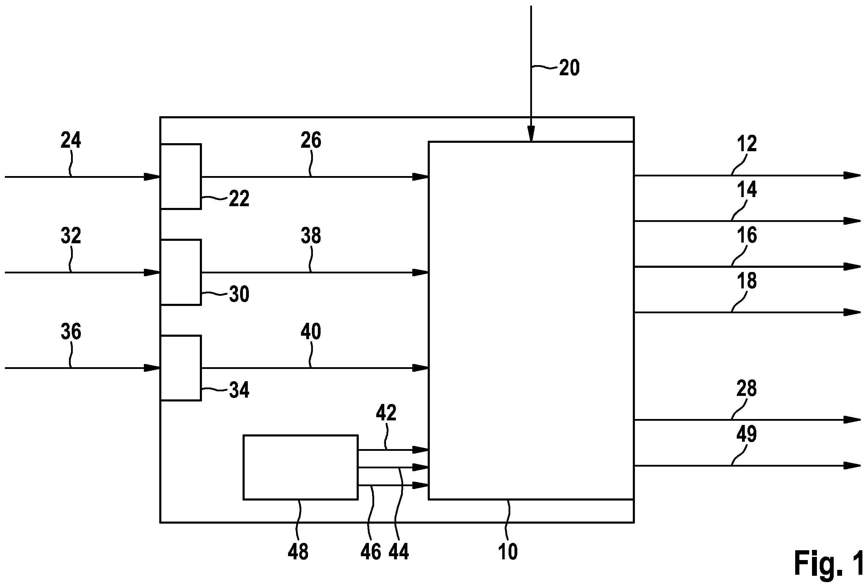

Fig. 1 zeigt eine schematische Darstellung einer Ausführungsform der Steuervorrichtung.

Die in Fig. 1 schematisch dargestellte Steuervorrichtung ist zum Steuern von Komponenten eines (nicht dargestellten) Bremssystems eines Fahrzeugs ausgelegt. Auf die mögliche Auslegung der Komponenten des Bremssystems wird bei den nachfolgenden Figuren genauer eingegangen.

Die Steuervorrichtung weist eine Steuereinrichtung 10 auf, mittels welcher das Bremssystem (zumindest) in einen ersten Betriebsmodus steuerbar ist, in welchem bei einer ausgeübten Betätigung eines an dem Bremssystem angeordneten Bremsbetätigungselements durch einen Fahrer ein Bremsdruckaufbau zumindest in einer ersten Radbremszange eines ersten Bremskreises des Bremssystems (im Wesentlichen) unterbunden ist. Man kann dies auch so umschreiben, dass trotz einer Betätigungsstärke ungleich Null der Betätigung des Bremsbetätigungselements ein Bremsdruckaufbau zumindest in der ersten Radbremszange des ersten Bremskreises des Bremssystems (im Wesentlichen) unterbunden ist. Dazu ist die Steuereinrichtung 10 dazu ausgelegt, ein erstes Radeinlassventil der ersten Radbremszange während des ersten Betriebsmodus mittels eines ersten Ventilsteuersignals 12 zumindest zeitweise in einen zumindest teilgeöffneten Zustand und ein erstes Radauslassventil der ersten Radbremszange während des ersten Betriebsmodus mittels eines zweiten Ventilsteuersignals 14 in einen zumindest teilgeöffneten Zustand gesteuert zu halten. Vorzugsweise verbleibt somit das erste Radauslassventil während des ersten Betriebsmodus in den zumindest teilgeöffneten Zustand.

Wie unten genauer ausgeführt wird, kann jedoch das erste Radeinlassventil während des ersten Betriebsmodus mittels des ersten Ventilsteuersignals 12 zumindest zeitweise in einen geschlossenen Zustand gesteuert werden. Außerdem sind mittels der Steuereinrichtung 10 zusätzlich ein zweites Radeinlassventil einer zweiten Radbremszange des ersten Bremskreises während des ersten Betriebsmodus mittels eines dritten Ventilsteuersignals 16 in einen zumindest teilgeöffneten Zustand und ein zweites Radauslassventil der zweiten Radbremszange während des ersten Betriebsmodus mittels eines vierten Ventilsteuersignals 18 in einen geschlossenen Zustand steuerbar. Auf diese Weise ist bewirkbar, dass, während der Bremsdruckaufbau der ersten Radbremszange trotz der Betätigungsstärke ungleich Null (im Wesentlichen) unterbunden ist, ein Bremsdruck (ungleich Null) in der zweiten Radbremszange aufbaubar ist.

Somit kann die unterdrückte Bremswirkung der ersten Radbremszange dazu genutzt werden, einen Generator zum Aufladen einer Fahrzeugbatterie einzusetzen, ohne dass eine von dem Fahrer vorgegebene Soll-Gesamtverzögerung des Fahrzeugs überschritten wird. Ebenso kann über das gleichzeitig mittels der Steuervorrichtung 10 bewirkte Einbremsen des Fahrzeugs in die zweite Radbremszange gewährleistet werden, dass der Fahrer bei der Betätigung des Bremsbetätigungselements trotz der unterdrückten Bremswirkung der ersten Radbremszange (und des Aktivierens des Generators) kein ungewohntes/störendes Bremsbetätigungsgefühl (Pedalgefühl) wahrnimmt. Des Weiteren erlaubt die Steuervorrichtung 10 trotz des verlässlichen Verblendens des Generator-Bremsmoments und der Beibehaltung des bevorzugten (standardgemäßen) Bremsbetätigungsgefühls während des Verblendens ein vergleichsweise häufiges Einsetzen des Generators zum schnellen Aufladen der Fahrzeugbatterie.

Vorzugsweise ist die Steuereinrichtung 10 auch dazu ausgelegt, eine Abweichung einer ermittelten oder hergeleiteten Ist-Druckgröße bezüglich des in der zweiten Radbremszange vorliegenden Bremsdrucks und/oder des in dem Hauptbremszylinder vorliegenden Innendrucks von einer vorgegebenen Soll-Druckgröße zu erkennen. In diesem Fall kann die Steuereinrichtung 10 während des Steuerns des Bremssystems in den ersten Betriebsmodus zusätzlich dazu ausgelegt sein, unter Berücksichtigung der Abweichung das erste Radeinlassventil mittels des ersten Ventilsteuersignals 12 aus dem geschossenen Zustand in den zumindest teilgeöffneten Zustand zu steuern. Bevorzugter Weise erfolgt das Steuern des ersten Radeinlassventils mittels des ersten Ventilsteuersignals 12 so, dass der Bremsdruck in der zweiten Radbremszange und/oder der Innendruck in dem Hauptbremszylinder um eine der Abweichung entsprechende Druckdifferenz reduzierbar ist. Die Druckreduzierung in der zweiten Radbremszange ist auf diese Weise ausführbar, obwohl der Bremsdruckaufbau der in den ersten Betriebsmodus gesteuerten ersten Radbremszange trotz der Betätigungsstärke ungleich Null (im Wesentlichen) unterbunden ist.

Die Soll-Druckgröße kann mittels eines Vergleichssignals 20 der Steuervorrichtung 10 von einer Fahrzeugsteuerung vorgegeben werden. Auf eine vorteilhafte Möglichkeit zum Festlegen der Soll-Druckgröße durch die Steuereinrichtung 10 wird unten noch eingegangen.

Die Steuervorrichtung 10 kann auch eine Sensor- oder Empfangseinrichtung 22 aufweisen, mittels welcher ein Ist-Drucksignal 24 von einem Sensor empfangbar oder ein Ist-Druckwert bezüglich des in der zweiten Radbremszange vorliegenden Bremsdrucks ermittelbar ist. Ein dem Ist-Drucksignal 24 oder dem Ist-Druckwert entsprechendes Ist-Druckgrößesignal 26 mit der ermittelten Ist-Druckgröße ist anschließend mittels der Sensor- oder Empfangseinrichtung 22 an die Steuereinrichtung 10 bereitstellbar. Als Alternative dazu kann die Steuereinrichtung 10 auch dazu ausgelegt sein, unter Berücksichtung der von der Steuereinrichtung 10 ausgegebenen Steuersignale eine wahrscheinliche Ist-Druckgröße herzuleiten.

Vorzugsweise ist die Steuereinrichtung 10 während des Steuerns des Bremssystems in den ersten Betriebsmodus zusätzlich dazu ausgelegt, unter Berücksichtigung der Abweichung der ermittelten oder hergeleiteten Ist-Druckgröße von der vorgegebenen Soll-Druckgröße ein Pumpsteuersignal 28 an eine Pumpeinrichtung des ersten Bremskreises auszugeben. Durch das Pumpsteuersignal 28 kann die Pumpeinrichtung so ansteuerbar sein, dass ein der Abweichung entsprechendes Bremsflüssigkeitsvolumen mittels der Pumpeinrichtung aus einer Speicherkammer in den ersten Bremskreis und/oder in dem Hauptbremszylinder pumpbar ist. Auf diese Weise sind der Bremsdruck in der zweiten Radbremszange und/oder der Innendruck in dem Hauptbremszylinder steigerbar.

Durch das Steigern und Reduzieren des in der zweiten Radbremszange vorliegenden Bremsdruck kann das von der zweiten Radbremszange auf ein zugeordnetes Rad ausgeübtes hydraulisches Bremsmoment entsprechend einem gewünschten Soll-Bremsmoment eingestellt werden. Insbesondere kann eine zeitliche Änderung des Generator-Bremsmoments auf diese Weise kompensiert werden. Ebenso kann auf diese Weise gewährleistet werden, dass der Fahrer bei einem Einbremsen in den Hauptbremszylinder ein vorteilhaftes (standardgemäßes) Bremsbetätigungsgefühl hat.

In einer vorteilhaften Weiterbildung weist die Steuervorrichtung eine erste Empfangseinrichtung 30 auf, mittels welcher ein bereitgestelltes Bremsbetätigungsstärke-Ausgabesignal 32 bezüglich einer Betätigungsstärke einer Betätigung eines (an dem Bremssystem angeordneten/angebundenen) Bremsbetätigungselements empfangbar ist. Das Bremsbetätigungsstärke-Ausgabesignal 32 kann beispielsweise ein Ausgabesignal eines Bremskraftsensors, eines Bremsdrucksensors und/oder eines Bremswegsensors sein. Die mittels des Bremsbetätigungsstärke-Ausgabesignals 32 empfangbare Information bezüglich der Betätigungsstärke kann eine auf ein (nicht dargestelltes) Bremsbetätigungselement ausgeübte Bremskraft, einen entsprechenden Bremsdruck und/oder einen Bremsbetätigungsweg, um welchen zumindest eine Teilkomponente des Bremsbetätigungselements verstellt wird, umfassen. Das empfangbare Bremsbetätigungsstärke-Ausgabesignal 32 ist jedoch nicht auf die hier aufgezählten Beispiele beschränkt.

Die Steuervorrichtung kann auch eine zweite Empfangseinrichtung 34 haben, mittels welcher ein bereitgestelltes Generator-Bremsmoment-Ausgabesignal 36 bezüglich eines durch einen Generator ausübbaren oder ausgeübten Generator-Bremsmoments empfangbar ist. Das Generator-Bremsmoment-Ausgabesignal 36 kann beispielsweise eine Information darüber umfassen, ob die Fahrzeuggeschwindigkeit zum Einsetzen des Generators mit einem bestimmten Generator-Bremsmoment geeignet ist und/oder ein Ladezustand einer mittels des Generators aufladbaren Batterie noch steigerbar ist. Ebenso kann das Generator-Bremsmoment-Ausgabesignal 36 das von dem Generator aktuell ausgeübte Generator-Bremsmoments angeben.

Ein dem Bremsbetätigungsstärke-Ausgabesignal 32 entsprechendes Bremsbetätigungsstärkesignal 38 und/oder ein dem Generator-Bremsmoment-Ausgabesignal 36 entsprechendes Generator-Bremsmomentsignal 40 können an die Steuereinrichtung 10 weitergeleitet werden. Die Steuereinrichtung 10 ist vorzugsweise dazu ausgelegt, das Bremsbetätigungsstärkesignal 38 mit einem vorgegebenen Schwellstärkesignal 42 und/oder das Generator-Bremsmomentsignal 40 mit einem vorgegebenen Mindest-Bremsmomentsignal 44 zu vergleichen. Sofern das Bremsbetätigungsstärkesignal 38 über dem Schwellstärkesignal 42 und/oder das Generator-Bremsmomentsignal 40 über dem Mindest-Bremsmomentsignal 44 liegen, steuert die Steuereinrichtung 10 das Bremssystem mittels der oben beschriebenen Ventilsteuersignale 12 bis 18 (und vorzugsweise mittels des Pumpsteuersignals 28) in den ersten Betriebsmodus. Andernfalls steuert die Steuereinrichtung 10 das Bremssystem (mittels anderer Ausgabesignale) in mindestens einen weiteren Betriebsmodus.

Bevorzugter Weise ist die Steuereinrichtung 10 zusätzlich dazu ausgelegt, das Bremsbetätigungsstärkesignal 38 mit einem vorgegebenen Mindeststärkesignal 46 zu vergleichen. In diesem Fall kann die Steuereinrichtung 10 das Bremssystem, sofern zumindest das Bremsbetätigungsstärkesignal 38 zwischen dem Mindeststärkesignal 46 und dem Schwellstärkesignal 42 liegt, in einen zweiten Betriebsmodus steuern. Vorzugsweise ist der zweite Betriebsmodus so ausgelegt, dass in dem zweiten Betriebsmodus trotz einer Betätigungsstärke ungleich Null der Betätigung des an dem Bremssystem angeordneten Bremsbetätigungselements ein Bremsdruckaufbau sowohl in der ersten Radbremszange als auch in der zweiten Radbremszange (im Wesentlichen) unterbunden ist. Dies ist bewirkbar, indem in dem zweiten Betriebsmodus das erste Radeinlassventil in den geschlossenen Zustand, das erste Radauslassventil in einen geschlossenen Zustand, das zweite Radeinlassventil in den zumindest teilgeöffneten Zustand und das zweite Radauslassventil in einen zumindest teilgeöffneten Zustand mittels der Steuereinrichtung 10 steuerbar sind.

Durch das Steuern des Bremssystems in den zweiten Betriebsmodus ist ein Druckaufbau in beiden Radbremszangen des ersten Bremskreises (und in dem Hauptbremszylinder) trotz einer Betätigung des Bremsbetätigungselements durch den Fahrer verhinderbar/reduzierbar. Somit kann die entfallende Bremswirkung der beiden Radbremszangen des ersten Bremskreises zum Einsetzen des Generators genutzt werden, ohne dass die von dem Fahrer gewünschte Fahrzeugverzögerung überschritten wird. Auf diese Weise kann eine Fahrzeugbatterie auch bereits bei einem leichten Abbremsvorgang aufgeladen werden. Es wird jedoch darauf hingewiesen, dass die Ausbildung der Steuereinrichtung 10 zum Steuern des Bremssystems in den zweiten Betriebsmodus optional ist.

Das Schwellstärkesignal 42, das Mindest-Bremsmomentsignal 44 und/oder das Mindeststärkesignal 46 können beispielsweise von einer Speichereinrichtung 48 an die Steuereinrichtung 10 bereitgestellt werden. Wie unten genauer ausgeführt wird, kann das Schwellstärkesignal 42 insbesondere einer Betätigungsstärke entsprechen, ab welcher ein Kraftübertragungskontakt zwischen dem Bremsbetätigungselement und einem verstellbaren Kolben eines Hauptbremszylinders des von der Steuervorrichtung gesteuerten Bremssystems vorliegt, wobei bei einer Betätigungsstärke unter der dem Schwellstärkesignal entsprechenden Betätigungsstärke eine Kraftübertragung zwischen dem Bremsbetätigungselement und dem verstellbaren Kolben verhindert ist. Auf die Vorteile einer derartigen Vorgabe/Festlegung des Schwellstärkesignals wird unten noch genauer eingegangen.

Das Mindest-Bremsmomentsignal 44 kann einem Generator-Bremsmoment entsprechen, ab welchem sich ein Aktiveren des Generators lohnt. Das Mindest-Bremsmomentsignal 44 kann jedoch auch einem Generator-Bremsmoment von Null entsprechen. In diesem Fall kann auf ein Bereitstellen des Mindest-Bremsmomentsignals 44 an die Steuereinrichtung 10 verzichtet werden. Das Mindeststärkesignal 46 kann einer Mindest-Betätigungsstärke bei einer Betätigung des Bremsbetätigungselements entsprechen, ab welcher ein Bremsdruckaufbau in den beiden Radbremszangen des ersten Bremskreises unterbunden werden soll. Das Mindeststärkesignal 46 kann jedoch auch einer Betätigungsstärke gleich Null entsprechen. In diesem Fall ist es nicht notwendig, mittels der Speichereinrichtung 48 das Mindeststärkesignal 46 an die Steuereinrichtung 10 bereitzustellen.

Des Weiteren kann die Steuereinrichtung 10 zusätzlich dazu ausgelegt sein, unter Berücksichtung des Bremsbetätigungsstärkesignals 38 und eines Generator-Bremsmomentsignals 40 bezüglich eines durch den Generator ausübbaren Generator-Bremsmoments die Soll-Druckgröße bezüglich eines Soll-Bremsdrucks in der zweiten Radbremszange und/oder in dem Hauptbremszylinder und/oder einen Soll-Modus des Generator festzulegen. Ein dem festgelegten Soll-Modus entsprechendes Generatorsteuersignal 49 kann anschließend von der Steuereinrichtung 10 an den Generator ausgegeben werden. Somit kann die Steuervorrichtung auch das Festlegen der Aufteilung der von dem Fahrer gewünschten Gesamt-Verzögerung in ein hydraulisches Bremsmoment und in das Generator-Bremsmoment übernehmen. Die hier beschriebene Steuervorrichtung ist jedoch nicht auf eine derartige Auslegung der Steuereinrichtung 10 limitiert.

Besondere Vorteile ergeben sich aus dem vorteilhaften Zusammenwirken der Steuervorrichtung 10 mit einem Bremssystem. Zum genaueren Erläutern dieser Vorteile wird deshalb auf die nachfolgende Beschreibung eines Bremssystems verwiesen.

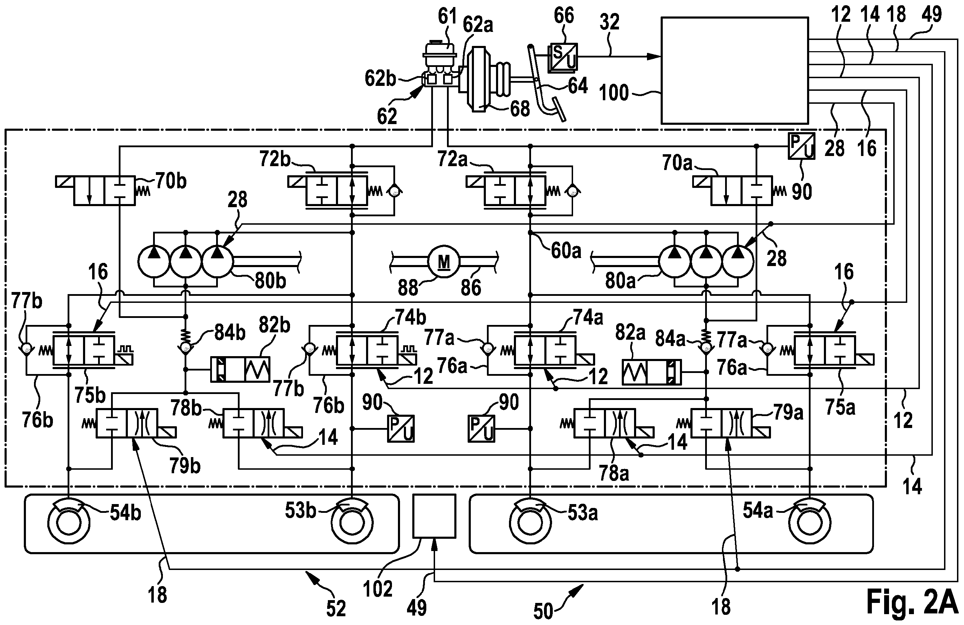

Fig. 2A bis 2G zeigen eine schematische Gesamtdarstellung, drei schematische Teildarstellungen und drei Koordinatensysteme zum Erläutern einer ersten Ausführungsform des Bremssystems.

Fig. 2A zeigt eine schematische Gesamtdarstellung einer Ausführungsform eines Bremssystems mit der Steuervorrichtung.

Das in Fig. 2A schematisch wiedergegebene Bremssystem ist beispielsweise in einem Hybrid- und in einem Elektrofahrzeug vorteilhaft einsetzbar. Die Einsetzbarkeit des im Weiteren beschriebenen Bremssystems ist jedoch nicht auf die Verwendung in einem Hybrid- oder in einem Elektrofahrzeug beschränkt.

Das Bremssystem hat einen ersten Bremskreis 50 mit einer ersten Radbremszange 53a und einer zweiten Radbremszange 54b. Optionalerweise hat das Bremssystem auch einen zweiten Bremskreis 52 mit einer dritten Radbremszange 53b und einer vierten Radbremszange 54b. Bevorzugter Weise ist das Bremssystem in diesem Fall für ein Fahrzeug mit X-Bremskreisaufteilung ausgelegt. In diesem Fall sind die erste Radbremszange 53a und die dritte Radbremszange 53b einer ersten Fahrzeugachse zugeordnet, während die zweite Radbremszange 54a und die vierte Radbremszange 54b einer anderen Fahrzeugachse zugeordnet sind. Die einem Bremskreis 50 und 52 zugeordneten Räder können insbesondere diagonal am Fahrzeug angeordnet sein. Beispielsweise können die erste Radbremszange 53a und die dritte Radbremszange 53b der Vorderachse zugeordnet sein, während die zweite Radbremszange 54a und die vierte Radbremszange 54b der Hinterachse zugeordnet sind. Das im Weiteren beschriebene Bremssystem ist jedoch nicht auf eine X-Bremskreisaufteilung beschränkt. Stattdessen ist das Bremssystem auch einsetzbar, wenn die einem gemeinsamen Bremskreis 50 oder 52 zugeordneten Räder achsweise oder auf einer Seite des Fahrzeugs angeordnet sind.

Das Bremssystem weist einen Hauptbremszylinder 62 auf, welcher beispielsweise als Tandemhauptbremszylinder ausführbar ist. Der Hauptbremszylinder 62 kann mindestens einen (nicht skizzierten) verstellbaren Hauptbremszylinder-Kolben haben, welcher zumindest teilweise in mindestens eine Druckkammer 62a oder 62b des Hauptbremszylinders 62 verstellbar ist. Bevorzugter Weise umfasst der Hauptbremszylinder 62 einen als Stangenkolben bezeichenbaren ersten verstellbaren Kolben, welcher zumindest teilweise in eine dem ersten Bremskreis 50 zugeordnete erste Druckkammer 62a des Hauptbremszylinders 62 hineinragt, und einen als Schwimmkolben bezeichenbaren zweiten verstellbaren Kolben, der zumindest teilweise in eine dem zweiten Bremskreis 52 zugeordnete zweite Druckkammer 62b des Hauptbremszylinders 62 hineinragt. In einer bevorzugten Ausführungsform ist der Schwimmkolben so verstellbar, dass bei einem Verstellen des Schwimmkolbens in eine erste Richtung das erste Innenvolumen der ersten Druckkammer 62a abnimmt, während das Innenvolumen der zweiten Druckkammer 62b zunimmt. Entsprechend kann über ein Verstellen des Schwimmkolbens in eine zweite Richtung das Innenvolumen der ersten Druckkammer 62a bei einer Abnahme des Innenvolumens der zweiten Druckkammer 62b zunehmen. Das Bremssystem ist jedoch nicht auf die Verwendung eines Tandemhauptbremszylinders oder auf eine bestimmte Ausbildung des Hauptbremszylinders 62 beschränkt. Der Hauptbremszylinder 62 kann über mindestens eine Bremsflüssigkeit-Austauschöffnung, wie beispielsweise eine Schnüffelbohrung, mit einem Bremsmediumreservoir 61 verbunden sein.

Das Bremssystem weist vorzugsweise ein an dem Hauptbremszylinder 62 angeordnetes Bremsbetätigungselement 64, wie beispielsweise ein Bremspedal, auf. Vorteilhafterweise ist das Bremsbetätigungselement 64 derart an dem Hauptbremszylinder 62 angeordnet, dass bei einem Betätigen des Bremsbetätigungselements 64 mit zumindest einer Schwellstärke eine auf das Bremsbetätigungselement 64 aufgebrachte Fahrerbremskraft auf mindestens einen verstellbaren Hauptbremszylinder-Kolben, wie beispielsweise auf den Stangenkolben und den Schwimmkolben, so übertragbar ist, dass der Hauptbremszylinder-Kolben mittels der Fahrerbremskraft verstellbar ist. Bevorzugter Weise wird mittels dieses Verstellens des Hauptbremszylinder-Kolbens ein Innendruck in mindestens einer Druckkammer 62a und 62b des Hauptbremszylinders 62 gesteigert.

Bei dem hier beschriebenen Bremssystem ist das Bremsbetätigungselement 64 zusätzlich derart an dem Hauptbremszylinder 62 angeordnet, dass während des Betätigens des Bremsbetätigungselements 64 mit einer Betätigungsstärke ungleich Null aber unter einer Schwellstärke eine Kraftübertragung zwischen dem Bremsbetätigungselement 64 und dem mindestens einen Hauptbremszylinder-Kolben unterbunden ist. Demgegenüber ist, obwohl bei einer Betätigung des Bremsbetätigungselements 64 mit einer Betätigungsstärke unter der Schwellstärke die Übertragung der Fahrerbremskraft auf den mindestens einen verstellbaren Kolben verhindert ist, bei einem Betätigen des Bremsbetätigungselements 64 mit einer Betätigungsstärke ab einer dem Schwellstärkesignal entsprechenden Schwellstärke mindestens ein verstellbarer Kolben des Hauptbremszylinders 62 in diesen zumindest teilweise hineinverstellbar. Dies gewährleistet den Vorteil, dass der Fahrer während des Betätigens des Bremsbetätigungselements 64 mit der Betätigungsstärke unter der Schwellstärke von dem Hauptbremszylinder 62 und dem mindestens einen daran angebundenen Bremskreis 50 und 52 "entkoppelt" ist, und somit keine Rückwirkung des darin vorliegenden Drucks spürt. Gleichzeitig kann die Fahrerbremskraft für ein starkes Abbremsen des Fahrzeugs ab einer Betätigungsstärke über der Schwellstärke genutzt werden. Auf die vorteilhafte Verwendbarkeit dieser Anordnung des Bremsbetätigungselements 64 an dem Hauptbremszylinder 62 zum Verblenden eines Generator-Bremsmoments wird unten noch genauer eingegangen. Das Bremssystem ist jedoch nicht auf eine derartige Anordnung des Bremsbetätigungselements 64 an dem Hauptbremszylinder 62 limitiert.

Bevorzugter Weise umfasst das Bremssystem auch mindestens einen Bremsbetätigungselement-Sensor 66, mittels welchem die Betätigungsstärke der Betätigung des Bremsbetätigungselements 64 durch den Fahrer ermittelbar ist. Der Bremsbetätigungselement-Sensor 26 kann beispielsweise einen Pedalwegsensor, einen Differenzwegsensor und/oder einen Stangenwegsensor umfassen. Zur Erfassung der Betätigungsstärke, welche dem Fahrerbremswunsch entspricht, ist jedoch auch eine anders geartete Sensorik anstelle oder zusätzlich zu den hier aufgezählten Sensortypen einsetzbar.

Das dargestellte Bremssystem weist in einer bevorzugten Ausführungsform noch einen Bremskraftverstärker 68, wie beispielsweise einen Vakuumbremskraftverstärker, auf. Anstelle eines Vakuumbremskraftverstärkers kann das Bremssystem auch einen anderen Typ des Bremskraftverstärkers 68, wie beispielsweise eine hydraulische und/oder eine elektromechanische Verstärkungseinrichtung, aufweisen. Der Bremskraftverstärker 68 kann insbesondere ein stetig regelbarer/stetig steuerbarer Bremskraftverstärker sein.

Mittels des Bremskraftverstärkers 68 ist in der Regel zumindest während des Betätigens des Bremsbetätigungselements 64 unter der Schwellstärke der mindestens eine Hauptbremszylinder-Kolben so verstellbar, dass ein Bremsflüssigkeitsvolumen aus dem Hauptbremszylinder 62 verschiebbar ist. Ein Bremskraftverstärker 68 weist in der Regel zu Beginn seines Betätigungswegs eine unendliche Verstärkung auf. In diesem Bereich besteht eine vernachlässigbare (evtl. keine) mechanische Kopplung zwischen dem Bremsbetätigungselement 64 und dem mindestens einen Hauptbremszylinder-Kolben. Man kann dies auch als Nichtvorliegen einer (wesentlichen) mechanischen Kopplung zwischen dem Bremsbetätigungselement 64 und dem Bremssystem bezeichnen. Die Fahrerbremskraft wird in diesem Bereich nicht zur Betätigung des Hauptbremszylinders 62, d.h. zum Verstellen des mindestens einen Hauptbremszylinder-Kolbens, herangezogen, sondern lediglich zur Steuerung des Bremskraftverstärkers 68 genutzt.

Der Beginn des Betätigungswegs, in welchem die Betätigungsstärke ungleich Null noch unter der Schwellstärke liegt, wird deshalb häufig auch Jump-In-Bereich genannt. Außerhalb des Jump-In-Bereichs existiert eine mechanische Kopplung zwischen dem Bremsbetätigungselement 64 und dem Hauptbremszylinder-Kolben. Die Fahrerbremskraft wird somit außerhalb des Jump-In-Bereichs zum Verstellen des Hauptbremszylinder-Kolbens und damit zum Einbremsen in den mindestens einen Radbremszylinder 53a, 53b, 54a und 54b genutzt. Dieser Vorgang kann durch die zusätzliche Kraft des Bremskraftverstärkers 68 unterstützt werden.

Die Eigenschaft des Bremskraftverstärkers 68 kann deshalb für ein Einbremsen in den Hauptbremszylinder 62 ohne eine (wesentliche) mechanische Kopplung/Kraftübertragung zwischen dem Bremsbetätigungselement 64 und dem Hauptbremszylinder-Kolben genutzt werden. Somit ist der Beginn des Betätigungswegs mit einer Betätigungsstärke ungleich Null aber unter der Schwellstärke, bzw. der Jump-In-Bereich, vorteilhaft für ein Verblenden eines Generator-Bremsmoments verwendbar, wie unten noch ausgeführt wird.

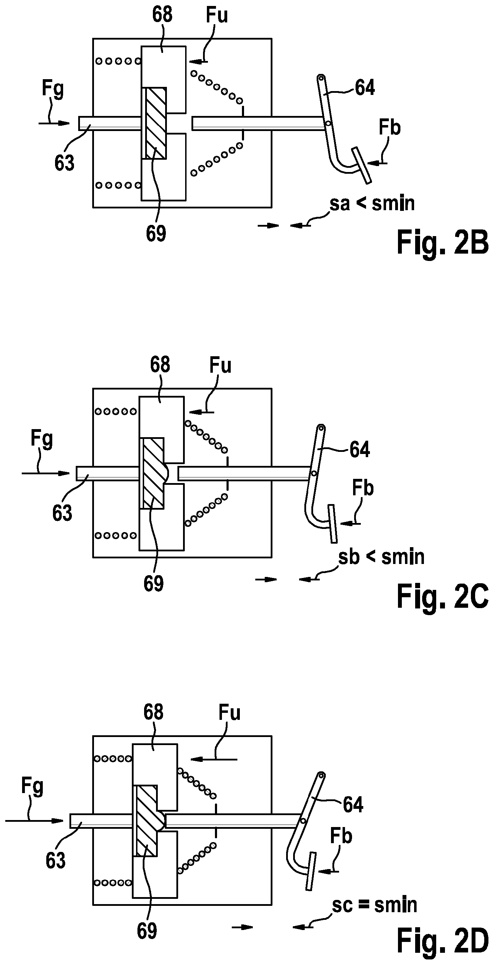

Fig. 2B bis 2D erläutern die vorteilhafte Anordnung des Bremsbetätigungselements 64 an dem Hauptbremszylinder 62:

Wie anhand der Fig. 2B zu erkennen ist, liegt bei einer Betätigungsstärke ungleich Null aber unter der Schwellstärke, z.B. bei einem Bremsbetätigungsweg sa ungleich Null aber unter einem Mindestbremsweg smin, trotz einer Fahrerbremskraft Fb ungleich Null keine Kraftübertragungsverbindung zwischen dem Bremsbetätigungselement 64 und dem mindestens einen verstellbaren Kolben 63 des Hauptbremszylinders 62, wie beispielsweise dem Stangenkolben, vor. Allerdings ist mittels des Bremskraftverstärkers 68 eine Unterstützungskraft Fu auf den verstellbaren Kolben 63 des Hauptbremszylinders 62 ausübbar. Somit kann der verstellbare Kolben 63 trotz der (nahezu) unterbundenen/nicht vorliegenden Kraftübertragung zwischen dem Bremsbetätigungselement 64 und dem verstellbaren Kolben 63 mittels des Bremskraftverstärkers 68 verstellt werden. Entsprechend erhöht sich eine dem Hineinverstellen des verstellbaren Kolbens 63 entgegenwirkende Gegenkraft Fg. Der Fahrer spürt jedoch aufgrund der (nahezu) unterbundenen Kraftübertragung zwischen dem Bremsbetätigungselement 64 und dem verstellbaren Kolben 63 bei einer Betätigung unter der Schwellstärke die Gegenkraft Fg (unabhängig von ihrer Größe) nicht.

Bei der in Fig. 2C wiedergegebenen Situation liegt der Bremsbetätigungsweg sb noch immer unter dem Mindestbremsweg smin. Entsprechend spürt der Fahrer bei der Betätigung des Bremsbetätigungselements 64 die im Vergleich zu Fig. 2B gesteigerte Gegenkraft Fg nicht.

Erst ab einer Betätigungsstärke gleich der Schwellstärke, z.B. bei einem Bremsbetätigungsweg sc gleich dem Mindestbremsweg smin, liegt ein Kraftübertragungskontakt zwischen dem Bremsbetätigungselement 64 und dem (mindestens einen) verstellbaren Kolben 63 des Hauptbremszylinders 62 vor, wie dies in Fig. 2D gezeigt ist. Der Kraftübertragungskontakt kann beispielsweise über ein elastisches Element, wie insbesondere eine Reaktionsscheibe 69, verlaufen.

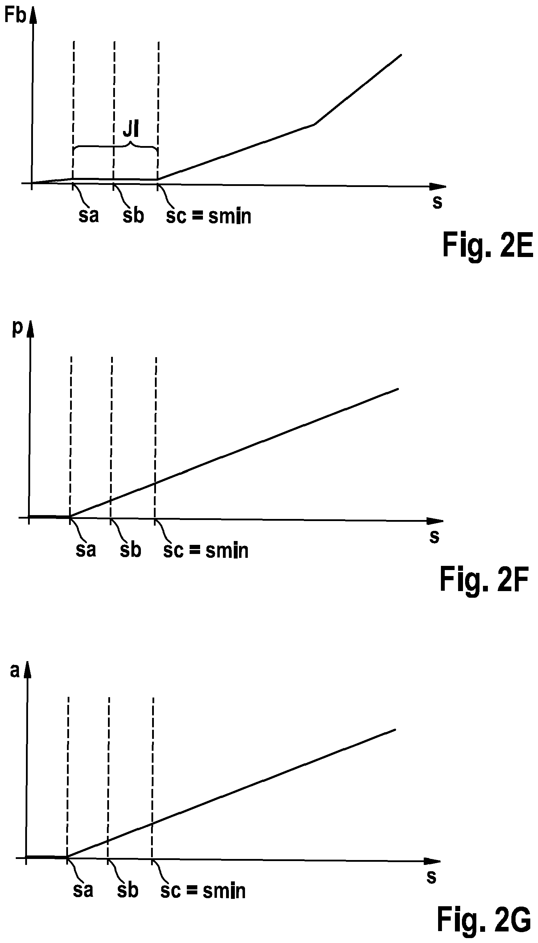

Fig. 2E bis 2G zeigen jeweils ein Koordinatensystem zum Erläutern der Vorteile der bevorzugten Anordnung des Bremsbetätigungselements 64 an dem Hauptbremszylinder 62. In den Koordinatensystemen der Fig. 2E bis 2G sind die Abszissen der als Betätigungsstärke wiedergegebene Bremsbetätigungsweg s. In Fig. 2E gibt die Ordinate die zugehörige Fahrerbremskraft Fb an. Der bei einem Bremsbetätigungsweg s im Hauptbremszylinder 62 vorliegende Druck p wird mittels der Ordinate der Fig. 2F angegeben. Die bei einem Bremsbetätigungsweg s ausgeführte Fahrzeugverzögerung a ist anhand der Ordinate der Fig. 2G erkennbar.

Wie anhand der Fig. 2E erkennbar ist, ist aufgrund der vorteilhaften Anordnung des Bremsbetätigungselements an dem Hauptbremszylinder 62 ein als Jump-In-Bereich JI bezeichenbarer Betätigungsbereich gewährleistet. Innerhalb des Jump-In-Bereichs JI kann der Fahrer das Bremsbetätigungselement 64 mit einer (nahezu) konstanten Fahrerbremskraft Fb verstellen.

Der Fahrer bremst während des Jump-In-Bereichs JI nur indirekt in den Hauptbremszylinder 62 hinein. Dies ist realisierbar, indem unter Verwendung eines Bremsbetätigungselement-Sensors eine dem Bremsbetätigungsweg s entsprechende Fahrzeugverzögerung a als Soll-Fahrzeugverzögerung festgelegt wird (siehe Fig. 2G). Anschließend kann mittels des Bremskraftverstärkers 68 der Druck p in dem Hauptbremszylinder 62 entsprechend der festgelegten Fahrzeugverzögerung a/Soll-Fahrzeugverzögerung eingestellt werden (siehe Fig. 2F). Man kann dies auch so umschreiben, dass der Fahrer weggesteuert in den Hauptbremszylinder 62 hineinbremst.

Nachfolgend werden mit Bezug zu Fig. 2A weitere Komponenten der Ausführungsform des Bremssystems beschrieben. Es wird ausdrücklich drauf hingewiesen, dass die im Weiteren beschriebenen Komponenten des Bremssystems lediglich ein Beispiel für eine mögliche Ausbildung des vorteilhaften Bremssystems darstellen. Ein Vorteil des Bremssystems liegt vor allem darin, dass die Bremskreise 50 und 52 nicht auf eine bestimmte Ausbildung oder auf das Einsetzen bestimmter Komponenten festgelegt sind. Stattdessen können die Bremskreise 50 und 52 mit einer hohen Wahlfreiheit modifiziert werden, ohne dass die Vorteile der Ausführungsform des Bremssystems beeinträchtigt werden:

Jeder der Bremskreise 50 und 52 ist mit einem Hochdruckschaltventil 70a und 70b und einem Umschaltventil 72a und 72b so ausgebildet, dass der Fahrer über den Hauptbremszylinder 62 direkt in die Radbremszangen 53a, 53b, 54a und 54b hineinbremsen kann. In dem ersten Bremskreis 50 sind der ersten Radbremszange 53a ein erstes Radeinlassventil 74a und der zweiten Radbremszange 54a ein zweites Radeinlassventil 75a, jeweils mit einer parallel dazu verlaufenden Bypassleitung 76a und einem in jeder Bypassleitung 76a angeordneten Rückschlagventil 77a zugeordnet. Zusätzlich sind ein erstes Radauslassventil 78a der ersten Radbremszange 53a und ein zweites Radauslassventil 79a der zweiten Rasbremszange 54a zugeordnet. Entsprechend können auch in dem zweiten Bremskreis 52 ein drittes Radeinlassventil 74b der dritten Radbremszange 53b und ein viertes Radeinlassventil 75b der dritten Radbremszange 54b zugeordnet sein. Parallel zu jedem der beiden Radeinlassventile 74b und 75b des zweiten Bremskreises 52 kann jeweils eine Bypassleitung 76b mit einem darin angeordneten Rückschlagventil 77b verlaufen. Des Weiteren können auch in dem zweiten Bremskreis 52 ein drittes Radauslassventil 78b der dritten Radbremszange 53b und ein viertes Radauslassventil 79b der vierten Radbremszange 54b zugeordnet sein.

Außerdem umfasst jeder der Bremskreise 50 und 52 eine Pumpe 80a und 80b, deren Ansaugseite mit den Radauslassventilen 78a und 79a oder 78b und 79b verbunden ist und deren Förderseite zu dem zugeordneten Umschaltventil 72a oder 72b gerichtet ist. Eine zwischen den Radauslassventilen 78a und 79a oder 78b und 79b und der Pumpe 80a oder 80b angeordnete Speicherkammer 82a oder 82b (z.B. Niederdruckspeicher) und ein zwischen der Pumpe 80a oder 80b und der Speicherkammer 82a oder 82b liegendes Überdruckventil 84a oder 84b weisen die Bremskreise 50 und 52 ebenso auf.

Die Pumpen 80a und 80b können auf einer gemeinsamen Welle 86 eines Motors 88 angeordnet sein. Jede der Pumpen 80a und 80b kann als Drei-Kolben-Pumpen ausgebildet sein. Anstelle von einer Drei-Kolben-Pumpe kann jedoch auch ein anderer Pumpentyp für mindestens eine der Pumpen 80a und 80b verwendet werden. Anders ausgeführte Modulationssysteme, wie z. B. Pumpen mit mehreren oder weniger Kolben, asymmetrische Pumpen oder Zahnradpumpen sind ebenfalls einsetzbar.

Das Bremssystem ist somit als ein modifiziertes Standard-Modulationssystem, insbesondere als Sechs-Kolben-ESP-System, ausführbar. Außerdem kann jeder der beiden Bremskreise 50 und 52 noch mindestens einen Drucksensor 90, insbesondere an einer Zuleitung einer als Vorderachsbremszange genutzten ersten Radbremszange 53a und/oder dritten Radbremszange 53b, umfassen.

Bei dem mit der Steuervorrichtung 100 ausgestatten Bremssystem können das erste Radeinlassventil 74a und das dritte Radeinlassventil 74b jeweils mittels des ersten Ventilsteuersignals 12, das erste Radeauslassventil 78a und das dritte Radauslassventil 78b jeweils mittels des zweiten Ventilsteuersignals 14, das zweite Radeinlassventil 75a und das vierte Radeinlassventil 75b jeweils mittels des dritten Ventilsteuersignals 16 und das zweite Radauslassventil 79a und das vierte Radauslassventil 79b jeweils mittels des vierten Ventilsteuersignals 18 angesteuert werden. Ebenso können die Pumpen 80a und 80b mittels des Pumpsteuersignals 28 angesteuert werden. Zusätzlich kann das Bremssystem noch einen Generator 102 umfassen, welcher mittels des Generator-Steuersignals 49 ansteuerbar ist. Auf diese Weise ist mittels des zumindest in den ersten Betriebsmodus steuerbaren Bremssystems ein regeneratives Bremsen unter Einhaltung eines guten Fahrkomforts für den Fahrer ausführbar.

Optionalerweise kann das Bremssystem mittels der Steuervorrichtung 100 auch in den zweiten Betriebsmodus steuerbar sein. Somit kann bereits bei einem leichten Abbremsen des Fahrzeugs mit einer Betätigungsstärke unter der Schwellstärke der Generator 102 zum Aufladen einer Fahrzeugbatterie eingesetzt werden. Da bei einer Betätigungsstärke unter der Schwellstärke kein Kraftübertragungskontakt zwischen dem Hauptbremszylinder 62 und dem Bremsbetätigungselement 64 vorliegt, spürt der Fahrer nichts von der durch das Steuern des Bremssystems in den zweiten Betriebsmodus unterbundenen Steigerung der Gegenkraft Fg. Damit ist auch bei einem Steuern des Bremssystems in den zweiten Betriebsmodus ein guter Fahrkomfort für den Fahrer gewährleistet.
Nach einem Verlassen des Jump-In-Bereichs kann eine an dem Bremsbetätigungselement 64 wahrnehmbare Gegenkraft Fg für den Fahrer erzeugt werden, indem Volumen aus den zuvor befüllten Speicherkammern 82a und 82b mittels der Pumpen 80a und 80b entnommen und die Bremskreise 50 und 52 verschoben wird. Dazu werden das erste Radeinlassventil 74a und das dritte Radeinlassventil 74b geschlossen, sodass das Volumen aus den Speicherkammern 82a und 82b ausschließlich in die zweite Radbremszange 54a und die vierte Radbremszange 54b verschoben wird und so zu einem Bremsdruckaufbau führt. Dieser Druck wirkt auch am Hauptbremszylinder 602 und stellt die notwendige Gegenkraft Fg am Bremsbetätigungselement 64 oberhalb des Jump-In-Bereichs dar. Dies bewirkt ein vorteilhaftes Bremsbetätigungsgefühl für den Fahrer.

Zur Ermittlung der Zieldruckvorgabe kann der Bremsbetätigungselement-Sensor 66 herangezogen werden. Da zu jedem Pedalweg ein passender Soll-Druck und damit eine passende Gegenkraft Fg existiert, kann der entsprechende Druck am Hauptbremszylinder 62 aktiv eingeregelt werden. Mittels des ersten Radeinlassventils 74a und des dritten Radeinlassventils 74b kann das gepumpte Volumen teilweise zur Druckreduktion in die Speicherkammern 82a und 82b abgelassen wird. In den Bremskreisen 50 und 52 befindet sich damit immer das Volumen für die zweite Radbremszange 54a und die vierte Radbremszange 54b und in den Speicherkammern 82a und 82b das Volumen der ersten Radbremszange 53a und der zweiten Radbremszange 53b. Damit kann auch oberhalb des Jump-In-Bereichs an einer der ersten Radbremszange 53a und der zweiten Radbremszange 53b zugeordneten Achse regenerativ gebremst werden.

Das mit der Steuervorrichtung 100 ausgestattete Bremssystem kann insbesondere auch die nachfolgend beschriebenen Verfahrensschritte ausführen. Bezüglich der Ausführung dieser Verfahrensschritte und ihrer Vorteile wird deshalb auf die Beschreibung der weiteren Figuren verwiesen.

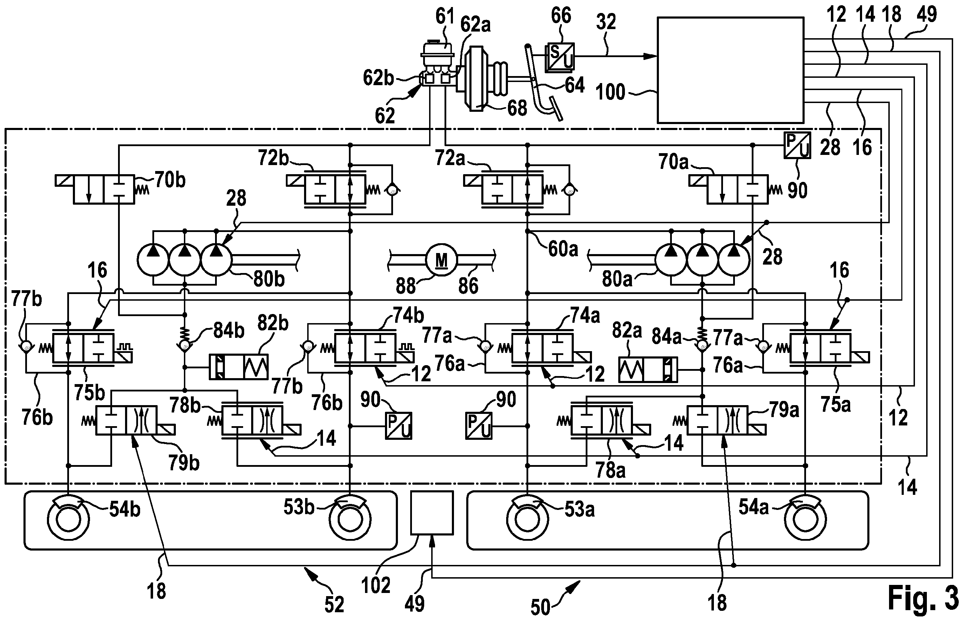

Fig. 3 zeigt eine schematische Gesamtdarstellung einer zweiten Ausführungsform des Bremssystems.

Das in der Fig. 3 schematisch wiedergegebene Bremssystem weist die oben schon beschriebenen Komponenten auf. Als Ergänzung sind das erste Radeauslassventil 78a und das dritte Radauslassventil 78b als (stetig) regelbare Auslassventile ausgebildet. Mithilfe des regelbaren ersten Radauslassventils 78a und des regelbaren dritten Radauslassventil 78b ist es möglich, Bremsflüssigkeit aus der ersten Radbremszange 53a und der dritten Radbremszange 53b kontrolliert in die Speicherkammern 82a und 82b zu verschieben. Dazu werden das erste Radeeinlassventil 74a und das dritte Radeinlassventil 74b geschlossen. Mittels dieser Ergänzung ist es somit möglich, von einem reinen hydraulischen Bremsen zu einem zumindest teilweisen regenerativen Bremsen an der der ersten Radbremszange 53a und der dritten Radbremszange 53b zugeordneten Achse, vorzugsweise der Vorderachse, zu verblenden. Da der Druck im Bremskreis durch diese Vorgehensweise nicht beeinträchtigt wird, kann der Fahrer diesen Verblendvorgang nicht bemerken.

Die oben beschriebenen Bremssysteme können auch aktive Druckaufbauten, d.h. Bremsanforderungen ohne eine Betätigung des Bremsbetätigungselements 64, über die Pumpen 80a und 80b, die Hochdruckschaltventile 70a und 70b und die geschlossenen Radauslassventile 78a, 78b, 79a und 79b ausführen. Des Weiteren weisen die Bremssysteme im Falle eines Kreisausfalls oder eines Bordnetzausfalls noch einen vergleichsweise guten Sicherheitsstandard auf. Zusätzliche Funktionseinschränkungen, wie z. B. ein verlängerter Leerweg oder eine erhöhte Betätigungskraft, müssen in einem Fehlerfall bei den beschriebenen Bremssystemen nicht in Kauf genommen werden.

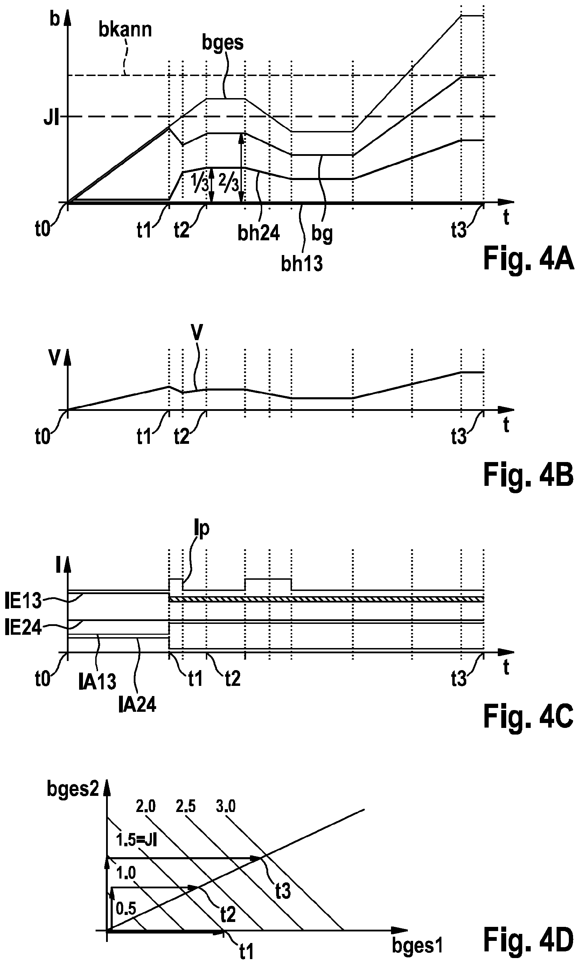

Fig. 4A bis 4D zeigen vier Koordinatensysteme zum Darstellen einer ersten Ausführungsform des Verfahrens.

Der besseren Anschaulichkeit wegen wird das Verfahren unter Verwendung eines der oben beschriebenen Bremssysteme beschrieben, wobei die erste Radbremszange und die dritte Radbremszange einer als Vorderachse ausgebildeten ersten Achse und die zweite Radbremszange und die vierte Radbremszange einer als Hinterachse ausgebildeten zweiten Achse zugeordnet sind. Die Ausführbarkeit des Verfahrens ist jedoch nicht auf die Verwendung eines der oben beschriebenen Bremssysteme oder auf eine derartige Zuordnung der Radbremszangen limitiert.

Bei den Koordinatensystemen der Fig. 4A bis 4C ist die Abszisse die Zeitachse t. Die Ordinate des Koordinatensystems der Fig. 4A gibt ein Bremsmoment b wieder, während die Ordinate der Fig. 4B einem verschobenen Bremsflüssigkeitsvolumen V entspricht und die Ordinate des Koordinatensystems der Fig. 4C eine Stromstärke I anzeigt. Die Abszisse des Koordinatensystems der Fig. 4D ist ein auf die erste Achse ausgeübtes erstes Teilbremsmoment bges1, während die Ordinate des Koordinatensystems der Fig. 4D ein auf die zweite Achse ausgeübtes Teilbremsmoment bges2 darstellt.

Zu einem Zeitpunkt t0 liegt das Bremsbetätigungselement des mittels des Verfahrens betriebenen Bremssystems in seiner Ausgangsstellung/Nicht-Betätigungstellung vor. Somit übt der Fahrer bis zum Zeitpunkt t0 keine Kraft auf das Bremsbetätigungselement aus.

Ab der Zeit t0 übt der Fahrer eine zunehmende Kraft auf das Bremsbetätigungselement aus, wodurch dieses verstellt wird. Allerdings ist das Bremsbetätigungselement des mittels des beschriebenen Verfahrens betätigten Bremssystems so an dem Hauptbremszylinder angeordnet, dass bei einer Betätigungsstärke der Betätigung des Bremsbetätigungselements durch den Fahrer unter einer Schwellstärke eine Kraftübertragung zwischen dem Bremsbetätigungselement und mindestens einem verstellbaren Kolben des Hauptbremszylinders unterbunden ist. (Bezüglich des auf diese Weise realisierbaren Jump-In-Bereichs wird auf die Ausführungen zu den Fig. 2B bis 2G verwiesen.) Bei dem hier wiedergegebenen Verfahren übt der Fahrer frühestens zu der Zeit t1 eine Betätigungsstärke im Bereich der Schwellstärke auf das Bremsbetätigungselement aus. Somit befindet sich das Bremsbetätigungselement zwischen den Zeiten t0 und t1 im Jump-In.

Um den Jump-In für ein Aufladen einer Fahrzeugbatterie mittels eines Generators zu nutzen, wird während des Verfahrens eine Betätigungsstärke der Betätigung des Bremsbetätigungselements mit einer vorgegebenen Schwellstärke verglichen. Optionalerweise kann die Betätigungsstärke auch mit einer vorgegebenen Mindeststärke verglichen werden. Des Weiteren kann auch ein durch einen Generator ausübbares oder ausgeübtes Generator-Bremsmoment mit einem vorgegebenen Mindest-Bremsmoment verglichen werden. Sofern zumindest die Betätigungsstärke unter der Schwellstärke liegt, bzw. zwischen der Mindeststärke und der Schwellstärke liegt, kann das Bremssystem in den oben beschriebenen zweiten Betriebsmodus gesteuert werden. Vorzugsweise wird das Bremssystem in den zweiten Betriebsmodus gesteuert, sofern auch das Generator-Bremsmoment über dem Mindest-Bremsmoment liegt. Dies gewährleistet, dass das aktuell ausführbare Generator-Bremsmoment bkann (Kann-Generator-Bremsmoment) eine generative Bremsung zulässt. Zwischen den Zeiten t0 bis t1 wird das Bremssystem somit in den zweiten Betriebsmodus gesteuert.

In dem zweiten Betriebsmodus werden das erste Radeinlassventil und das dritte Radeinlassventil in den geschlossenen Zustand, das erste Radauslassventil und das dritte Radauslassventil in den geschlossenen Zustand, das zweite Radeinlassventil und das vierte Radeinlassventil in den zumindest teilgeöffneten Zustand und das zweite Radauslassventil und das vierte Radauslassventil in den zumindest teilgeöffneten Zustand gesteuert. Bei einer Ausbildung der Radeinlassventile als stromlos offene Ventile wird an das erste Radeinlassventil und das dritte Radeinlassventil ein erstes Ventilsteuersignal IE13 mit einer Stromstärke ungleich Null und an das zweite Radeinlassventil und das vierte Radeinlassventil ein drittes Ventilsteuersignal IA13 mit einer Stromstärke gleich Null bereitgestellt. Sofern die Radauslassventile als stromlos geschlossene Ventile ausgebildet sind, wird an das erste Radauslassventil und das dritte Radauslassventil ein zweites Ventilsteuersignal IE24 mit einer Stromstärke gleich Null und an das zweite Radauslassventil und das vierte Radauslassventil ein viertes Ventilsteuersignal IA24 mit einer Stromstärke ungleich Null ausgegeben.

Durch das Öffnen des zweiten Radeinlassventils und des zweiten Radauslassventils, sowie des vierten Radeinlassventils und des vierten Radauslassventils kann das aus dem Hauptbremszylinder heraus geschobene Bremsflüssigkeitsvolumen V in die Speicherkammern verschoben werden. Somit ist trotz eines Betätigens des Bremsbetätigungselements durch den Fahrer und eines damit verbundenen Verstellens des mindestens einen verstellbaren Kolbens des Hauptbremszylinders ein Bremsdruckaufbau in der zweiten Radbremszange und in der vierten Radbremszange verhinderbar. Die hydraulischen Bremsmomente bh24 der zweiten Radbremszange und der vierten Radbremszange bleiben somit gleich Null. (Entsprechend kann durch das Schließen des ersten Radeinlassventils und des dritten Radeinlassventils sichergestellt werden, dass zwischen den Zeiten t0 und t1 bei einem Bremsen innerhalb des Jump-In-Bereichs auch die hydraulischen bh13 Bremsmomente der ersten Bremszange und der dritten Bremszange gleich Null bleiben.)

Somit kann, sofern ein von dem Fahrer durch die Betätigungsstärke vorgegebenes Soll-Gesamtbremsmoment bges kleiner als ein mittels des Generators ausführbares Kann-Generator-Bremsmoment bkann ist, das von dem Fahrer angeforderte Soll-Gesamtbremsmoment bges als Generator-Bremsmoment bg aufgebracht werden. Dies gewährleistet ein schnelles Aufladen einer mittels des Generators aufladbaren Fahrzeugbatterie bereits bei einem leichten Abbremsen des Fahrzeugs.

Ab/Nach der Zeit t1 überwindet der Fahrer den Jump-In-Bereich. Nach einem Feststellen, dass die Betätigungsstärke über der Schwellstärke liegt, bzw. nahezu an der Schwellstärke liegt, wird das Bremssystem in den oben beschriebenen ersten Betriebsmodus gesteuert. Dies erfolgt durch ein Steuern des ersten Radeinlassventils und des dritten Radeinlassventils wechselweise in den zumindest teilgeöffneten Zustand und in den geschlossenen Zustand, ein Halten des ersten Radauslassventils und des dritten Radauslassventils in den zumindest teilgeöffneten Zustand, ein Steuern des zweiten Radeinlassventils und des vierten Radeinlassventils in den zumindest teilgeöffneten Zustand und ein Steuern des zweiten Radauslassventils und des vierten Radauslassventils in den geschlossenen Zustand. Bei einer Ausbildung der Radeinlassventile als stromlos offene Ventile wird an das erste Radeinlassventil und das dritte Radeinlassventil ein erstes Ventilsteuersignal IE13 mit einer zwischen Null und Eins wechselnden Stromstärke und an das zweite Radeinlassventil und das vierte Radeinlassventil ein drittes Ventilsteuersignal IA13 mit einer Stromstärke gleich Null bereitgestellt. Sofern die Radauslassventile als stromlos geschlossene Ventile ausgebildet sind, wird an das erste Radauslassventil und das dritte Radauslassventil ein zweites Ventilsteuersignal IE24 mit einer Stromstärke ungleich Null und an das zweite Radauslassventil und das vierte Radauslassventil ein viertes Ventilsteuersignal IA24 mit einer Stromstärke gleich Null ausgegeben. Auf diese Weise ist trotz der Betätigungsstärke ungleich Null ab der Zeit t1 ein Bremsdruckaufbau in der ersten Radbremszange und der dritten Radbremszange unterbunden (bh13 gleich Null), während ein Bremsdruck in der zweiten Radbremszange und in der vierten Radbremszange aufgebaut wird (bh24 ungleich Null).

Um zu gewährleistet, dass der Fahrer bei einer vorliegenden Kraftübertragung zwischen dem Bremsbetätigungselement und dem mindestens einen verstellbaren Kolben des Hauptbremszylinders ein bevorzugtes (standardgemäßes) Bremsbetätigungsgefühl hat, kann das in die Speicherkammer verschobene Bremsflüssigkeitsvolumen V zumindest teilweise in den Hauptbremszylinder, die zweite Radbremszange und/oder die vierte Radbremszange gepumpt werden. Mittels eines Pumpensteuersignal Ip mit einer Stromstärke ungleich Null können die Pumpen der beiden Bremskreise dazu aktiviert werden.

Das Zurückverschieben des Volumens V zum Gewährleisten eines vorteilhaften Bremsbetätigungsgefühls für den Fahrer ab einem Vorliegen eines Kraftübertragungskontakts zwischen dem Bremsbetätigungselement und dem verstellbaren Kolben des Hauptbremszylinders, bzw. ab einem Verlassen des Jump-In-Bereichs, ist beispielsweise ausführbar, indem während des Steuerns des Bremssystems in den ersten Betriebsmodus eine Ist-Druckgröße bezüglich des in der zweiten Radbremszange, in der vierten Radbremszange und/oder in dem Hauptbremszylinder, vorliegenden Bremsdrucks ermittelt oder hergeleitet und mit einer vorgegebenen Soll-Druckgröße verglichen wird. (Theoretisch können das erste Radeinlassventil und/oder das dritte Radauslassventil bei einer Ist-Druckgröße über der Soll-Druckgröße mittels des ersten Ventilsteuersignals IE13 so in den zumindest teilgeöffneten Zustand gesteuert werden, dass der Bremsdruck in der zweiten Radbremszange um eine einer Abweichung der Ist-Druckgröße von der Soll-Druckgröße entsprechende Druckdifferenz reduziert wird. Dies ist bewirkbar, während der Bremsdruckaufbau der ersten Radbremszange trotz der Betätigungsstärke ungleich Null unterbunden wird.) Entsprechend kann, bei einer Ist-Druckgröße unter der Soll-Druckgröße mindestens eine Pumpe so angesteuert werden, dass ein der Abweichung entsprechendes Bremsflüssigkeitsvolumen aus einer Speicherkammer in den ersten Bremskreis gepumpt wird. Auf diese Weise ist auch eine Steigerung eines in der zweiten Radbremszange, der vierten Radbremszange und/oder in dem Hauptbremszylinder vorliegenden Drucks bewirkbar.

Auf diese Weise ist nicht nur gewährleistbar, dass der Fahrer ab dem Vorliegen eines Kraftübertragungskontakts zwischen dem Bremsbetätigungselement und dem verstellbaren Kolben des Hauptbremszylinders, bzw. ab einem Verlassen des Jump-In-Bereichs, ein bevorzugtes (standardgemäßes) Bremsbetätigungsgefühl hat, sondern man kann auch ein gewünschtes Größenverhältnis zwischen dem Generator-Bremsmoment bg und dem hydraulischen Bremsmoment bh24 der zweiten Radbremszange und der vierten Radbremszange einstellen. Beispielsweise wird zwischen den Zeiten t2 und t3 das Größenverhältnis zwischen dem Generator-Bremsmoment bg und dem hydraulischen Bremsmoment bh24 der zweiten Radbremszange und der vierten Radbremszange, bzw. zwischen dem auf die erste Achse ausgeübten Teilbremsmoment bges1 und dem auf die zweite Achse ausgeübten Teilbremsmoment bges 2, auf 2/3 zu 1/3 eingestellt. Dies gewährleistet eine vorteilhafte Bremsmoment-Verteilung auf die Achsen des Fahrzeugs trotz eines hydraulischen Bremsmoment bh13 der ersten Radbremszange und der dritten Radbremszange gleich Null und einem aktivierten Generator.

In dem Beispiel der Fig. 4A bis 4D ist das ausführbare Generator-Bremsmoment bkann zeitlich konstant und liegt immer über 66% des von dem Fahrer vorgegebenen Soll-Gesamtbremsmoment bges. Nachfolgend wird beschrieben, dass das Verfahren auch auf eine Zu- oder Abnahme des Generator-Bremsmoments reagieren kann.

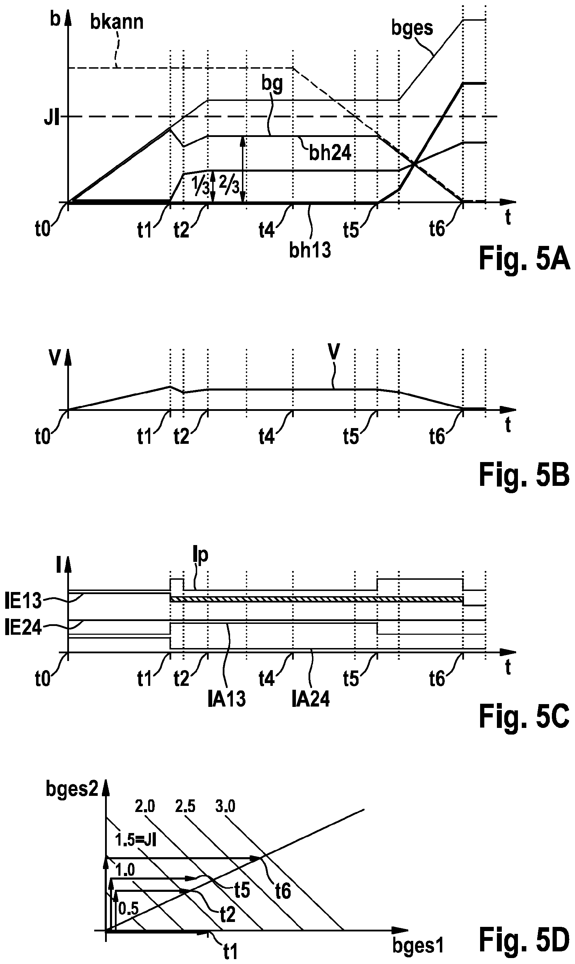

Fig. 5A bis 5D zeigen vier Koordinatensysteme zum Darstellen einer zweiten Ausführungsform des Verfahrens. (Bezüglich der Abszissen und der Ordinaten wird auf die Ausführungen zu den Fig. Fig. 4A bis 4D verwiesen.)

Ab dem Zeitpunkt t4 nimmt das ausführbare Generator-Bremsmoment bkann ab. Gründe für die Abnahme des ausführbaren Generator-Bremsmoments bkann können beispielsweise eine aktuelle Fahrzeug-Geschwindigkeit unter einer zum Einsetzten des Generators vorteilhaften Mindestgeschwindigkeit und/oder ein vergleichweise hoher Aufladezustand der Batterie sein.

Ab dem Zeitpunkt t5 ist das ausführbare Generator-Bremsmoment bkann kleiner als 66% des von dem Fahrer vorgegebenen Soll-Gesamtbremsmoments bges. Das Verfahren kann jedoch auch auf diese Situation regieren. Dazu können das erste Radauslassventil und das dritte Radauslassventil geschlossen werden. Z.B. kann bei einer stromlos geschlossenen Ausbildung ein drittes Ventilsteuersignal IA13 gleich Null an das erste Radauslassventil und das dritte Radauslassventil ausgegeben werden. Entsprechend der Abnahme des ausführbaren Generator-Bremsmoment bkann kann gleichzeitig mittels der mindestens einen Pumpe Volumen aus den Speicherkammern in den Bremskreis zurückgefördert. Dieses Volumen führt jedoch nicht/kaum zu einer Erhöhung der Gegenkraft auf das Bremsbetätigungselement, da das äquivalente Volumen über das erste Radeinlassventil und das dritte Radeinlassventil in die erste Radbremszange und der dritte Radbremszange verschoben werden kann. Der Druck in den Bremskreisen und damit auch die Gegenkraft am Bremsbetätigungselement bleiben konstant. Das zusätzliche Volumen führt zu einem Anstieg des hydraulischen Bremsmoments hb13 der ersten Radbremszange und der dritten Radbremszange. Vorzugsweise ist das hydraulische Bremsmoment hb13 der ersten Radbremszange und der dritten Radbremszange so aufbaubar, dass trotz einer limitierten Einsetzbarkeit des Generators ab der Zeit t5 die Summe aus dem Generator-Bremsmoment bg, dem hydraulischen Bremsmoment hb13 der ersten Radbremszange und der dritten Radbremszange und dem hydraulischen Bremsmoment bh24 der zweiten Radbremszange und der vierten Radbremszange dem Soll-Gesamtbremsmoment bges (Fahrerbremswunsch) entspricht.

Ab dem Zeitpunkt t6 ist das komplette zuvor verschobene Volumen wieder in den jeweiligen Bremskreis zurückgefördert, und es wird rein hydraulisch gebremst (bg gleich Null). Der Unterschied ist jedoch für den Fahrer nicht wahrnehmbar.

Auch im Jump-In-Bereich kann bei einem aktuellen Fahrerbremswunsch über dem ausführbaren Generator-Bremsmoment bkann sowohl regenerativ als auch hydraulisch gebremst werden. Übersteigt das Soll-Gesamtbremsmoment bges bereits im Jump-In-Bereich das ausführbare Generator-Bremsmoment bkann, so werden das zweite Radauslassventil und das vierte Radauslassventil wieder geschlossen. Jede weitere Erhöhung des Soll-Gesamtbremsmoments bges und das dadurch aus dem Hauptbremszylinder verschobene Volumen führen zu einem Bremsdruckaufbau in der zweiten Radbremszange und der vierten Radbremszange. Auch in diesem Fall kann die Summe aus dem Generator-Bremsmoment und dem hydraulischem Bremsmoment bh24 der zweiten Radbremszange und der vierten Radbremszange dem Soll-Gesamtbremsmoments bges entsprechen. Aufgrund der fehlenden mechanischen Kopplung stützt sich die durch den hydraulischen Druckaufbau verursachte Gegenkraft nicht an dem Bremsbetätigungselement, sondern lediglich an der Verstärkungskraft ab. Die Veränderung der Gegenkraft ist somit für den Fahrer bei der Betätigung des Bremsbetätigungselements nicht wahrnehmbar.

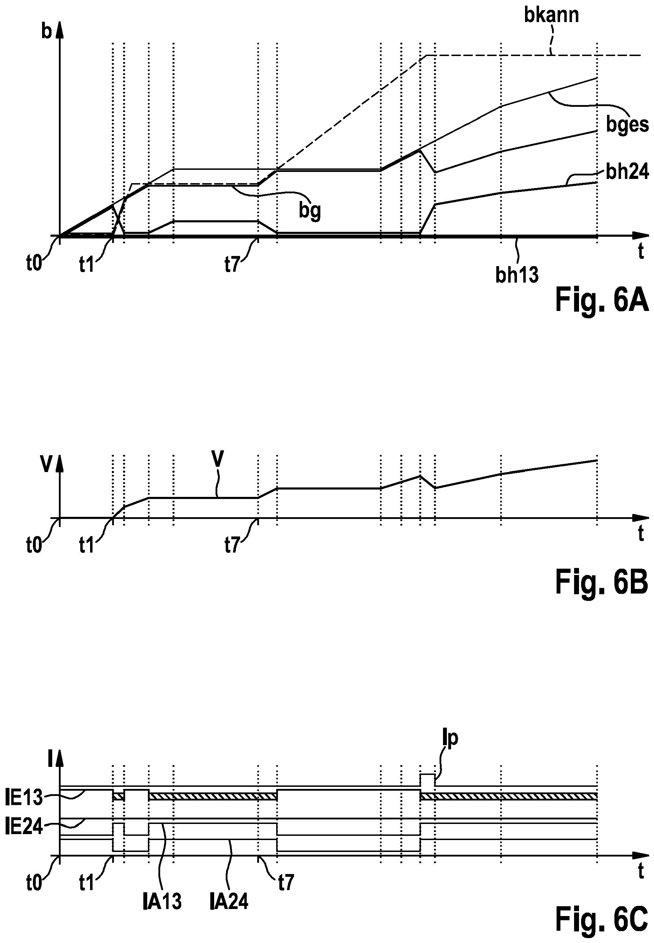

Fig. 6A bis 6C zeigen drei Koordinatensysteme zum Darstellen einer zweiten Ausführungsform des Verfahrens. (Bezüglich der Abszissen und der Ordinaten wird auf die Ausführungen zu den Fig. Fig. 4A bis 4C verwiesen.)

Nimmt das ausführbare Generator-Bremsmoment bkann (Kann-Generator-Bremsmoment) während einer Bremsung zu, wie dies bei dem dargestellten Ausführungsbeispiel ab dem Zeitpunkt t7 der Fall ist, kann das Generator-Bremsmoment bg entsprechend der Zunahme des ausführbaren Generator-Bremsmoments bkann erhöht werden. Dies ist auch ausführbar, obwohl der Fahrer keine Veränderung seines Bremswunsches vorgibt. Die zu große Verzögerung kann dazu führen, dass der Fahrer seine Betätigung des Bremsbetätigungselements reduziert. Bei diesem Vorgang wird aber lediglich das hydraulische Bremsmoment bh24 der zweiten Radbremszange und der vierten Radbremszange reduziert. Das führt zu einer wahrnehmenden Änderung der Pedalweg-Verzögerungscharakteristik, wodurch jedoch ein schnelleres Aufladen der Fahrzeugbatterie und somit eine gesteigerte Energiegewinnung realisiert werden.

Als Alternative dazu kann das Generator-Bremsmoment bg auch konstant gehalten werden. Diese Betriebsstrategie hat den Vorteil des maximalen Komforts, da der Fahrer keine Veränderung in der Pedalweg- Pedalkraft- oder Pedalweg-Verzögerungscharakteristik wahrnimmt.

In einer alternativen Ausführungsform der oben beschriebenen Verfahren kann auch an der Vorderachse hydraulisch gebremst werden, während an der Hinterachse regenerativ gebremst wird.

Die oben beschriebenen Verfahren können insbesondere Bestandteil eines Verfahrens zum Betreiben eines Bremssystems eines Fahrzeugs mit einer X-Bremskreisaufteilung sein. Ihre Ausführbarkeit ist jedoch nicht auf ein Fahrzeug mit einer X-Bremskreisaufteilung beschränkt.

## Patentansprüche

1. Steuervorrichtung (100) für ein Bremssystem eines Fahrzeugs, mit
einer Steuereinrichtung (10), mittels welcher das Bremssystem in einen ersten Betriebsmodus steuerbar ist, in welchem bei einer ausgeübten Betätigung eines an dem Bremssystem angeordneten Bremsbetätigungselements (64) durch einen Fahrer ein Bremsdruckaufbau zumindest in einer ersten Radbremszange (53a) eines ersten Bremskreises (50) des Bremssystems unterbunden ist, wobei ein erstes Radeinlassventil (74a) der ersten Radbremszange (53a) während des ersten Betriebsmodus zumindest zeitweise in einen zumindest teilgeöffneten Zustand steuerbar ist und ein erstes Radauslassventil (78a) der ersten Radbremszange (53a) während des ersten Betriebsmodus in einen zumindest teilgeöffneten Zustand haltbar ist;
**dadurch gekennzeichnet, dass**
mittels der Steuereinrichtung (10) zusätzlich das erste Radeinlassventil (74a) während des ersten Betriebsmodus zumindest zeitweise in einen geschlossenen Zustand, ein zweites Radeinlassventil (75a) einer zweiten Radbremszange (54a) des ersten Bremskreises (50) während des ersten Betriebsmodus in einen zumindest teilgeöffneten Zustand und ein zweites Radauslassventil (79a) der zweiten Radbremszange (54a) während des ersten Betriebsmodus in einen geschlossenen Zustand so steuerbar sind, dass, während der Bremsdruckaufbau in der ersten Radbremszange (53a) bei der Betätigung des Bremsbetätigungselements (64) unterbunden ist, ein Bremsdruck in der zweiten Radbremszange (54a) aufbaubar ist.

2. Steuervorrichtung (100) nach Anspruch 1, wobei die Steuereinrichtung (10) während des Steuerns des Bremssystems in den ersten Betriebsmodus zusätzlich dazu ausgelegt ist, unter Berücksichtigung einer Abweichung einer ermittelten oder hergeleiteten Ist-Druckgröße (26) bezüglich des in der zweiten Radbremszange (54a) vorliegenden Bremsdrucks von einer vorgegebenen Soll-Druckgröße (20) das erste Radeinlassventil (74a) aus den geschossenen Zustand in den zumindest teilgeöffneten Zustand so zu steuern, dass der Bremsdruck in der zweiten Radbremszange (54a) um eine der Abweichung entsprechende Druckdifferenz reduzierbar ist, während der Bremsdruckaufbau der ersten Radbremszange (53a) bei der ausgeübten Betätigung des Bremsbetätigungselements (64) unterbunden ist.

3. Steuervorrichtung (100) nach Anspruch 2, wobei die Steuereinrichtung (10) während des Steuerns des Bremssystems in den ersten Betriebsmodus zusätzlich dazu ausgelegt ist, unter Berücksichtigung der Abweichung der ermittelten oder hergeleiteten Ist-Druckgröße (26) von der vorgegebenen Soll-Druckgröße (20) ein Pumpsteuersignal (28) an eine Pumpeinrichtung (80a) des ersten Bremskreises (50) auszugeben, durch welches die Pumpeinrichtung (80a) so ansteuerbar ist, dass ein der Abweichung entsprechendes Bremsflüssigkeitsvolumen mittels der Pumpeinrichtung (80a) aus einer Speicherkammer (82a) in den ersten Bremskreis (50) so pumpbar ist, dass der Bremsdruck in der zweiten Radbremszange (54a) steigerbar ist.

4. Steuervorrichtung (100) nach einem der vorhergehenden Ansprüche zusätzlich mit:
einer ersten Empfangseinrichtung (30), mittels welcher ein bereitgestelltes Bremsbetätigungsstärkesignal (38) bezüglich einer Betätigungsstärke (sa, sb, sc) einer Betätigung eines Bremsbetätigungselements (64) empfangbar ist; und
einer zweiten Empfangseinrichtung (34), mittels welcher ein bereitgestelltes Generator-Bremsmomentsignal (40) bezüglich eines durch einen Generator (102) ausübbaren oder ausgeübten Generator-Bremsmoments empfangbar ist;
wobei die Steuereinrichtung (10) dazu ausgelegt ist, das Bremsbetätigungsstärkesignal (38) mit einem vorgegebenen Schwellstärkesignal (42) und/oder das Generator-Bremsmomentsignal (40) mit einem vorgegebenen Mindest-Bremsmomentsignal (44) zu vergleichen, und, sofern das Bremsbetätigungsstärkesignal (38) über dem Schwellstärkesignal (42) und/oder das Generator-Bremsmomentsignal (40) über dem Mindest-Bremsmomentsignal (44) liegen, das Bremssystem in den ersten Betriebsmodus zu steuern, andernfalls in mindestens einen weiteren Betriebsmodus zu steuern.

5. Steuervorrichtung (100) nach Anspruch 4, wobei die Steuereinrichtung (10) zusätzlich dazu ausgelegt ist, das Bremsbetätigungsstärkesignal (38) mit einem vorgegebenen Mindeststärkesignal (46) zu vergleichen, und, sofern zumindest das Bremsbetätigungsstärkesignal (38) zwischen dem Mindeststärkesignal (46) und dem Schwellstärkesignal (42) liegt, das Bremssystem in einen zweiten Betriebsmodus zu steuern, in welchem das erste Radeinlassventil (74a) in den geschlossenen Zustand, das erste Radauslassventil (78a) in einen geschlossenen Zustand, das zweite Radeinlassventil (75a) in den zumindest teilgeöffneten Zustand und das zweite Radauslassventil (79a) in einen zumindest teilgeöffneten Zustand steuerbar sind.

6. Steuervorrichtung (100) nach Anspruch 4 oder 5, wobei die Steuereinrichtung (10) zusätzlich dazu ausgelegt ist, unter Berücksichtigung des Bremsbetätigungsstärkesignals (38) und eines empfangenen Generator-Bremsmomentsignals (40) bezüglich eines durch den Generator (102) ausübbaren Generator-Bremsmoments (bkann) die Soll-Druckgröße bezüglich eines Soll-Bremsdrucks in der zweiten Radbremszange und einen Soll-Modus des Generator festzulegen und ein dem festgelegten Soll-Modus entsprechendes Generatorsteuersignals (49) an den Generator (102) auszugeben.

7. Bremssystem für ein Fahrzeug mit einer Steuervorrichtung (100) nach einem der vorhergehenden Ansprüche.

8. Bremssystem nach Anspruch 7, wobei das Bremssystem für ein Fahrzeug mit X-Bremskreisaufteilung ausgelegt ist.

9. Bremssystem nach Anspruch 7 oder 8, wobei das Bremssystem ein Bremsbetätigungselement (64) umfasst, welches derart an dem Hauptbremszylinder (62) angeordnet ist, dass bei einem Betätigen des Bremsbetätigungselements (64) mit einer Betätigungsstärke (sc) ab einer dem Schwellstärkesignal (42) entsprechenden Schwellstärke (smin) eine Fahrerbremskraft (Fb) auf mindestens einen verstellbarer Kolben (63) des Hauptbremszylinders (62) übertragbar ist, während bei einem Betätigungen des Bremsbetätigungselements (64) mit einer Betätigungsstärke (sa, sb) unter der Schwellstärke (smin) eine Übertragung der Fahrerbremskraft (Fb) auf den mindestens einen verstellbaren Kolben (63) verhindert ist.

10. Verfahren zum Betreiben eines Bremssystems eines Fahrzeugs mit den Schritten:
Steuern des Bremssystems in einen ersten Betriebsmodus, in welchem bei einem Betätigen eines an dem Bremssystem angeordneten Bremsbetätigungselements (64) durch einen Fahrer ein Bremsdruckaufbau zumindest in einer ersten Radbremszange (53a) eines ersten Bremskreises (50) des Bremssystems unterbunden wird, durch Steuern eines ersten Radeinlassventils (74a) der ersten Radbremszange (53a) während des ersten Betriebsmodus zumindest zeitweise in einen zumindest teilgeöffneten Zustand und Halten eines ersten Radauslassventils (78a) der ersten Radbremszange (53a) während des ersten Betriebsmodus in einen zumindest teilgeöffneten Zustand;
**gekennzeichnet durch** die Schritte:
Steuern des ersten Radeinlassventils (74a) während des ersten Betriebsmodus zumindest zeitweise in einen geschlossenen Zustand, Steuern eines zweiten Radeinlassventils (75a) einer zweiten Radbremszange (54a) des ersten Bremskreises (50) während des ersten Betriebsmodus in einen zumindest teilgeöffneten Zustand und Steuern eines zweiten Radauslassventils (79a) der zweiten Radbremszange (54a) während des ersten Betriebsmodus in einen geschlossenen Zustand, wodurch, während der Bremsdruckaufbau der ersten Radbremszange (53a) unterbunden wird, ein Bremsdruck in der zweiten Radbremszange (54a) aufgebaut wird.

11. Verfahren nach Anspruch 10, wobei während des Steuerns des Bremssystems in den ersten Betriebsmodus eine Ist-Druckgröße bezüglich des in der zweiten Radbremszange vorliegenden Bremsdrucks ermittelt oder hergeleitet und mit einer vorgegebenen Soll-Druckgröße verglichen wird, und wobei, bei einer Ist-Druckgröße über der Soll-Druckgröße das erste Radeinlassventil (74a) aus den geschossenen Zustand so in den zumindest teilgeöffneten Zustand gesteuert wird, dass der Bremsdruck in der zweiten Radbremszange (54a) um eine einer Abweichung der Ist-Druckgröße von der Soll-Druckgröße entsprechende Druckdifferenz reduziert wird, während der Bremsdruckaufbau der ersten Radbremszange (53a) bei dem Betätigen des Bremsbetätigungselements (64) unterbunden wird.

12. Verfahren nach Anspruch 11, wobei, bei einer Ist-Druckgröße unter der Soll-Druckgröße eine Pumpeinrichtung (80a) des ersten Bremskreises (50) so angesteuert wird, dass ein der Abweichung entsprechendes Bremsflüssigkeitsvolumen mittels der Pumpeinrichtung (80a) aus einer Speicherkammer (2a) in den ersten Bremskreis (50) so gepumpt wird, dass der Bremsdruck in der zweiten Radbremszange (54a) gesteigert wird.

13. Verfahren nach einem der Ansprüche 10 bis 12, wobei eine Betätigungsstärke (sa, sb, sc) einer Betätigung eines Bremsbetätigungselements mit einer vorgegebenen Schwellstärke (smin) und/oder ein durch einen Generator ausübbares oder ausgeübtes Generator-Bremsmoment mit einem vorgegebenen Mindest-Bremsmoment verglichen werden, und wobei, sofern die Betätigungsstärke (sa, sb, sc) über der Schwellstärke (smin) und/oder das Generator-Bremsmoment über dem Mindest-Bremsmoment liegen, das Bremssystem in den ersten Betriebsmodus gesteuert wird, andernfalls in mindestens einen weiteren Betriebsmodus gesteuert wird.

14. Verfahren nach Anspruch 13, wobei die Betätigungsstärke (sa, sb, sc) mit einer vorgegebenen Mindeststärke verglichen wird, und wobei, sofern zumindest die Betätigungsstärke (sa, sb, sc) zwischen der Mindeststärke und der Schwellstärke (smin) liegt, das Bremssystem in einen zweiten Betriebsmodus gesteuert wird, in welchem das erste Radeinlassventil (74a) in den geschlossenen Zustand, das erste Radauslassventil (78a) in einen geschlossenen Zustand, das zweite Radeinlassventil (75a) in den zumindest teilgeöffneten Zustand und das zweite Radauslassventil (79a) in einen zumindest teilgeöffneten Zustand gesteuert werden.

15. Verfahren zum Betreiben eines Bremssystems eines Fahrzeugs mit einer X-Bremskreisaufteilung gemäß einem der Ansprüche 10 bis 14.

## Claims

1. Control device (100) for a brake system of a vehicle, comprising
a control apparatus (10) by means of which the brake system can be placed in a first operating mode in which, when the brake actuation element (64) which is arranged on the brake system is actuated by a driver a brake pressure increase in at least one first wheel brake calliper (53a) of a first brake system (50) of the brake system is prevented, wherein a first wheel inlet valve (74a) of the first wheel brake calliper (53a) can, during the first operating mode, be placed at least temporarily in an at least partially opened state, and a first wheel outlet valve (78a) of the first wheel brake calliper (53a) can be held in an at least partially opened state during the first operating mode;
**characterized in that**
by means of the control device (10) the first wheel inlet valve (74a) can be additionally placed at least temporarily in a closed state during the first operating mode, a second wheel inlet valve (75a) of a second wheel brake calliper (54a) of the first brake circuit (50) can be placed in an at least partially opened state during the first operating mode, and a second wheel outlet valve (79a) of the second wheel brake calliper (54a) can be placed in a closed state during the first operating mode, in such a way that while an increase in brake pressure in the first wheel brake calliper (53a) is prevented during the actuation of the brake actuation element (64), a brake pressure can be increased in the second wheel brake calliper (54a).

2. Control device (100) according to Claim 1, wherein the control apparatus (10) is additionally configured, during the placing of the brake system in the first operation mode, to adjust the first wheel inlet valve (74a) from the closed state into the at least partially opened state, while taking into account a deviation of a determined or derived actual pressure variable (26) relating to the brake pressure present in the second wheel brake calliper (54a) from a predefined setpoint pressure variable (20), in such a way that the brake pressure in the second wheel brake calliper (54a) can be reduced by a pressure difference corresponding to the deviation, while the increase in brake pressure of the first wheel brake calliper (53a) is prevented during the actuation of the brake actuation element (64).

3. Control device (100) according to Claim 2, wherein the control apparatus (10) is additionally configured, during the placing of the brake system in the first operating mode, to output, while taking into account the deviation of the determined or derived actual pressure variable (26) from the predefined setpoint pressure variable (20), a pump control signal (28) to a pump apparatus (80a) of the first brake circuit (50), by means of which pump control signal (28) the pump apparatus (80a) can be actuated in such a way that a brake fluid volume corresponding to the deviation can be pumped by means of the pump apparatus (80a) from a storage chamber (82a) into the first brake circuit (50) in such a way that the brake pressure in the second wheel brake calliper (54a) can be increased.

4. Control device (100) according to one of the preceding claims, additionally comprising:
a first receiver apparatus (30) by means of which a supplied brake actuation intensity signal (38) relating to an actuation intensity (sa, sb, sc) of actuation of a brake actuation element (64) can be received; and
a second receiver apparatus (34) by means of which a supplied generator braking torque signal (40) relating to a generator braking torque which can be applied or is applied by means of a generator (102) can be received;
wherein the control apparatus (10) is configured to compare the brake actuation intensity signal (38) with a predefined threshold intensity signal (42) and/or to compare the generator braking torque signal (40) with a predefined minimum braking torque signal (44), and if the brake actuation intensity signal (38) is above the threshold intensity signal (42), and/or the generator braking torque signal (40) is above the minimum braking torque signal (44), to place the brake system in the first operating mode, and otherwise to place it in at least one further operating mode.

5. Control device (100) according to Claim 4, wherein the control apparatus (10) is additionally configured to compare the brake actuation intensity signal (38) with a predefined minimum intensity signal (46) and, if at least the brake actuation intensity signal (38) is between the minimum intensity signal (46) and the threshold intensity signal (42), to place the brake system in a second operating mode in which the first wheel brake valve (74a) can be placed in the closed state, the first wheel outlet valve (78a) can be placed in a closed state, the second wheel inlet valve (75a) can be placed in the at least partially opened state, and the second wheel outlet valve (79a) can be placed in an at least partially opened state.

6. Control device (100) according to Claim 4 or 5, wherein the control apparatus (10) is additionally configured to define, while taking into account the brake actuation intensity signal (38) and a received generator braking torque signal (40) relating to a generator braking torque (bkann) which can be applied by the generator (102), the setpoint pressure variable relating to a setpoint brake pressure in the second wheel brake calliper and a setpoint mode of the generator, and to output a generator control signal (49), corresponding to the defined setpoint mode, to the generator (102).

7. Brake system for a vehicle having a control device (100) according to one of the preceding claims.

8. Brake system according to Claim 7, wherein the brake system is designed for a vehicle with X brake circuit configuration.

9. Brake system according to Claim 7 or 8, wherein the brake system comprises a brake actuation element (64) which is arranged on the master brake cylinder (62) in such a way that when the brake actuation element (64) is actuated with an actuation intensity (sc) at or above a threshold intensity (smin) which corresponds to the threshold intensity signal (42) a driver's braking force (Fb) can be transmitted to at least one adjustable piston (63) of the master brake cylinder (62), while during actuation of the brake actuation element (64) with an actuation intensity (sa, sb) below the threshold intensity (smin), transmission of the driver's braking force (Fb) to the at least one adjustable piston (63) is prevented.

10. Method for operating a brake system of a vehicle comprising the steps:
placing the brake system in a first operating mode in which during actuation of a brake actuation element (64) which is arranged on the brake system by an increase in brake pressure in at least a first wheel brake calliper (53a) of a first brake circuit (50) of the brake system is prevented by a driver, by placing a first wheel inlet valve (74a) of the first wheel brake calliper (53a) at least temporarily in an at least partially opened state during the first operating mode, and holding a first wheel outlet valve (78a) of the first wheel brake calliper (53a) in an at least partially opened state during the first operating mode;
**characterized by** the steps:
placing the first wheel inlet valve (74a) at least partially in a closed state during the first operating mode, placing a second wheel inlet valve (75a) of a second wheel brake calliper (54a) of the first brake circuit (50) in an at least partially opened state during the first operating mode, and placing a second wheel outlet valve (79a) of the second wheel brake calliper (54a) in a closed state during the first operating mode, as a result of which while an increase in brake pressure in the first wheel brake calliper (53a) is prevented, a brake pressure in the second wheel brake calliper (54a) is increased.

11. Method according to Claim 10, wherein while the brake system is placed in the first operating mode, an actual pressure variable relating to the brake pressure present in the second wheel brake calliper is determined or derived and compared with a predefined setpoint pressure variable, and wherein when there is an actual pressure variable above the setpoint pressure variable the first wheel inlet valve (74a) is adjusted from the closed state into the at least partially opened state in such a way that the brake pressure in the second wheel brake calliper (54a) is reduced by a pressure difference corresponding to a deviation of the actual pressure variable from the setpoint pressure variable, while the increase in the brake pressure of the first wheel brake calliper (53a) during the actuation of the brake actuation element (64) is prevented.

12. Method according to Claim 11, wherein when there is an actual pressure variable below the setpoint pressure variable, a pumping apparatus (80a) of the first brake circuit (50) is actuated in such a way that a brake fluid volume which corresponds to the deviation is pumped by means of the pump apparatus (80a) from a storage chamber (2a) into the first brake circuit (50) in such a way that the brake pressure in the second wheel brake calliper (54a) is increased.

13. Method according to one of Claims 10 to 12, wherein an actuation intensity (sa, sb, sc) of actuation of a brake actuation element with a predefined threshold intensity (smin) and/or a generator braking torque which can be applied or is applied by a generator is compared with a predefined minimum braking torque, and wherein if the actuation intensity (sa, sb, sc) is above the threshold intensity (smin) and/or the generator braking torque is above the minimum braking torque, the brake system is placed in the first operating mode, and otherwise is placed in at least one further operating mode.

14. Method according to Claim 13, wherein the actuation intensity (sa, sb, sc) is compared with a predefined minimum intensity, and wherein if at least the actuation intensity (sa, sb, sc) is between the minimum intensity and the threshold intensity (smin), the brake system is placed in a second operating mode in which the first wheel inlet valve (74a) is placed in the closed state, the first wheel outlet valve (78a) is placed in a closed state, the second wheel inlet valve (75a) is placed in the at least partially opened state, and the second wheel outlet valve (79a) is placed in an at least partially opened state.

15. Method for operating a brake system of a vehicle having an X brake circuit distribution according to one of Claims 10 to 14.

## Revendications

1. Dispositif de commande (100) pour un système de freinage d'un véhicule, comprenant
un dispositif de commande (10), au moyen duquel le système de freinage peut être commandé dans un premier mode de freinage, dans lequel, lors d'un actionnement par un conducteur d'un élément d'actionnement des freins (64) disposé sur le système de freinage, une augmentation de la pression de freinage est supprimée au moins dans une première mâchoire de frein de roue (53a) d'un premier circuit de freinage (50) du système de freinage, une première soupape d'entrée de roue (74a) de la première mâchoire de frein de roue (53a) pouvant être commandée dans le premier mode de fonctionnement au moins temporairement dans un état au moins partiellement ouvert et une première soupape de sortie de roue (78a) de la première mâchoire de frein de roue (53a) pouvant être maintenue dans le premier mode de fonctionnement dans un état au moins partiellement ouvert ;
**caractérisé en ce que**
de plus, le dispositif de commande (10) permet de commander la première soupape de sortie de roue (74a) dans le premier mode de fonctionnement au moins temporairement dans un état fermé, une deuxième soupape d'entrée de roue (75a) d'une deuxième mâchoire de frein de roue (54a) du premier circuit de freinage (50) dans le premier mode de fonctionnement dans un état au moins partiellement ouvert, et une deuxième soupape de sortie de roue (79a) de la deuxième mâchoire de frein de roue (54a) dans le premier mode de fonctionnement dans un état fermé, de telle sorte que pendant que l'augmentation de la pression de freinage dans la première mâchoire de frein de roue (53a) est supprimée lors de l'actionnement de l'élément d'actionnement des freins (64), une pression de freinage dans la deuxième mâchoire de frein de roue (54a) puisse être établie.

2. Dispositif de commande (100) selon la revendication 1, dans lequel le dispositif de commande (10), pendant la commande du système de freinage dans le premier mode de fonctionnement, est en outre conçu, en tenant compte d'un écart d'une grandeur de pression réelle déterminée ou dérivée (26) par rapport à la pression de freinage régnant dans la deuxième mâchoire de frein de roue (54a) par rapport à une grandeur de pression de consigne prédéfinie (20), pour commander la première soupape d'entrée de roue (74a) de l'état fermé dans l'état au moins partiellement ouvert de telle sorte que la pression de freinage dans la deuxième mâchoire de frein de roue (54a) puisse être réduite d'une différence de pression correspondant à l'écart, tandis que l'augmentation de la pression de freinage de la première mâchoire de frein de roue (53a) est supprimée lors de l'actionnement de l'élément d'actionnement des freins (64).

3. Dispositif de commande (100) selon la revendication 2, dans lequel le dispositif de commande (10), pendant la commande du système de freinage dans le premier mode de fonctionnement, en tenant compte de l'écart de la grandeur de pression réelle déterminée ou dérivée (26) par rapport à la grandeur de pression de consigne prédéfinie (20), est conçu en outre pour émettre un signal de commande de pompe (28) vers un dispositif de pompe (80a) du premier circuit de freinage (50), par le biais duquel le dispositif de pompe (80a) peut être commandé de telle sorte qu'un volume de liquide de frein correspondant à l'écart puisse être pompé au moyen du dispositif de pompe (80a) hors d'une chambre de stockage (82a) dans le premier circuit de freinage (50), de telle sorte que la pression de freinage dans la deuxième mâchoire de frein de roue (54a) puisse être augmentée.

4. Dispositif de commande (100) selon l'une quelconque des revendications précédentes, comprenant en outre :
un premier dispositif de réception (30), au moyen duquel un signal de puissance d'actionnement des freins fourni (38) par rapport à une puissance d'actionnement (sa, sb, sc) d'un actionnement d'un élément d'actionnement des freins (64) peut être reçu ; et
un deuxième dispositif de réception (34), au moyen duquel un signal de couple de freinage de générateur fourni (40) par rapport à un couple de freinage de générateur exercé ou pouvant être exercé par un générateur (102) peut être reçu ;
le dispositif de commande (10) étant conçu pour comparer le signal de puissance d'actionnement des freins (38) à un signal de puissance de seuil prédéfini (42) et/ou pour comparer le signal de couple de freinage de générateur (40) à un signal de couple de freinage minimal prédéfini (44), et si le signal de puissance d'actionnement des freins (38) est au-dessus du signal de puissance de seuil (42) et/ou si le signal de couple de freinage de générateur (40) est supérieur au signal de couple de freinage minimal (44), pour commander le système de freinage dans le premier mode de fonctionnement, sinon pour le commander dans au moins un mode de fonctionnement supplémentaire.

5. Dispositif de commande (100) selon la revendication 4, dans lequel le dispositif de commande (10) est en outre conçu pour comparer le signal de puissance d'actionnement des freins (38) à un signal de puissance minimal prédéfini (46), et si au moins le signal de puissance d'actionnement des freins (38) est situé entre le signal de puissance minimal (46) et le signal de puissance de seuil (42), pour commander le système de freinage dans un deuxième mode de fonctionnement dans lequel la première soupape d'entrée de roue (74a) peut être commandée dans l'état fermé, la première soupape de sortie de roue (78a) peut être commandée dans un état fermé, la deuxième soupape d'entrée de roue (75a) peut être commandée dans l'état au moins partiellement ouvert et la deuxième soupape de sortie de roue (79a) peut être commandée dans un état au moins partiellement ouvert.

6. Dispositif de commande (100) selon la revendication 4 ou 5, dans lequel le dispositif de commande (10) est en outre conçu, en tenant compte du signal de puissance d'actionnement des freins (38) et d'un signal de couple de freinage de générateur reçu (40) par rapport à un couple de freinage de générateur (bkann) pouvant être exercé par le générateur (102), pour établir la grandeur de pression de consigne par rapport à une pression de freinage de consigne dans la deuxième mâchoire de frein de roue et un mode de consigne de générateur et pour émettre un signal de commande de générateur (49) correspondant au mode de consigne établi vers le générateur (102).

7. Système de freinage pour un véhicule, comprenant un dispositif de commande (100) selon l'une quelconque des revendications précédentes.

8. Système de freinage selon la revendication 7, dans lequel le système de freinage pour un véhicule est conçu avec une division en X des circuits de freinage.

9. Système de freinage selon la revendication 7 ou 8, dans lequel le système de freinage comprend un élément d'actionnement des freins (64) qui est disposé sur le cylindre de freinage principal (62) de telle sorte que lors d'un actionnement de l'élément d'actionnement des freins (64) avec une puissance d'actionnement (sc) à partir d'une puissance de seuil (smin) correspondant au signal de puissance de seuil (42), une puissance de freinage du conducteur (Fb) puisse être transmise à au moins un piston déplaçable (63) du cylindre de freinage principal (62), tandis que lors d'un actionnement de l'élément d'actionnement des freins (64) avec une puissance d'actionnement (sa, sb) en dessous de la puissance de seuil (smin), un transfert de la puissance de freinage du conducteur (Fb) à l'au moins un piston déplaçable (63) soit empêché.

10. Procédé pour faire fonctionner un système de freinage d'un véhicule comprenant les étapes suivantes :
commande du système de freinage dans un premier mode de fonctionnement dans lequel, lors d'un actionnement par un conducteur d'un élément d'actionnement des freins (64) disposé au niveau du système de freinage, une augmentation de la pression de freinage est supprimée au moins dans une première mâchoire de frein de roue (53a) d'un premier circuit de freinage (50) du système de freinage, par commande d'une première soupape d'entrée de roue (74a) de la première mâchoire de frein de roue (53a) dans le premier mode de fonctionnement au moins temporairement dans un état au moins partiellement ouvert et par maintien d'une première soupape de sortie de roue (78a) de la première mâchoire de frein de roue (53a) dans le premier mode de fonctionnement dans un état au moins partiellement ouvert ;
**caractérisé par** les étapes suivantes :
commande de la première soupape d'entrée de roue (74a) dans le premier mode de fonctionnement au moins temporairement dans un état fermé,
commande d'une deuxième soupape d'entrée de roue (75a) d'une deuxième mâchoire de frein de roue (54a) du premier circuit de freinage (50) dans le premier mode de fonctionnement dans un état au moins partiellement ouvert et commande d'une deuxième soupape de sortie de roue (79a) de la deuxième mâchoire de frein de roue (54a) dans le premier mode de fonctionnement dans un état fermé,
de sorte que, tandis que l'augmentation de pression de freinage de la première mâchoire de frein de roue (53a) est supprimée, une pression de freinage dans la deuxième mâchoire de frein de roue (54a) est établie.

11. Procédé selon la revendication 10, dans lequel pendant la commande du système de freinage dans le premier mode de fonctionnement, une grandeur de pression réelle est déterminée ou dérivée par rapport à la pression de freinage existant dans la deuxième mâchoire de frein de roue et est comparée avec une grandeur de pression de consigne prédéfinie, et dans lequel, si la grandeur de pression réelle est supérieure à la grandeur de pression de consigne, la première soupape d'entrée de roue (74a) est commandée hors de l'état fermé dans l'état au moins partiellement ouvert de telle sorte que la pression de freinage dans la deuxième mâchoire de frein de roue (54a) soit réduite d'une différence de pression correspondant à un écart de la grandeur de pression réelle par rapport à la grandeur de pression de consigne, tandis que l'augmentation de la pression de freinage de la première mâchoire de frein de roue (53a) est supprimée lors de l'actionnement de l'élément d'actionnement des freins (64).

12. Procédé selon la revendication 11, dans lequel, dans le cas d'une grandeur de pression réelle en dessous de la grandeur de pression de consigne, un dispositif de pompe (80a) du premier circuit de freinage (50) est commandé de telle sorte qu'un volume de liquide de frein correspondant à l'écart soit pompé au moyen du dispositif de pompe (80a) hors d'une chambre de stockage (2a) dans le premier circuit de freinage (50) de telle sorte que la pression de freinage dans la deuxième mâchoire de frein de roue (54a) soit augmentée.

13. Procédé selon l'une quelconque des revendications 10 à 12, dans lequel une puissance d'actionnement (sa, sb, sc) d'un actionnement d'un élément d'actionnement des freins est comparée à une puissance de seuil prédéfinie (smin) et/ou un couple de freinage de générateur exercé ou pouvant être exercé par un générateur est comparé à un couple de freinage minimal prédéfini et si la puissance d'actionnement (sa, sb, sc) se situe au-dessus de la puissance de seuil (smin) et/ou que le couple de freinage de générateur se situe au-dessus du couple de freinage minimal, le système de freinage est commandé dans le premier mode de fonctionnement, sinon est commandé dans moins un autre mode de fonctionnement.

14. Procédé selon la revendication 13, dans lequel la puissance d'actionnement (sa, sb, sc) est comparée avec une puissance minimale prédéfinie et si au moins la puissance d'actionnement (sa, sb, sc) se situe entre la puissance minimale et la puissance de seuil (smin), le système de freinage est commandé dans un deuxième mode de fonctionnement dans lequel la première soupape d'entrée de roue (74a) est commandée dans l'état fermé, la première soupape de sortie de roue (78a) est commandée dans un état fermé, la deuxième soupape d'entrée de roue (75a) est commandée dans l'état au moins partiellement ouvert et la deuxième soupape de sortie de roue (79a) est commandée dans un état au moins partiellement ouvert.

15. Procédé pour faire fonctionner un système de freinage d'un véhicule comprenant une division en X des circuits de freinage, selon l'une quelconque des revendications 10 à 14.
